Europäisches Patentamt

(19) European Patent Office

Office européen des brevets

(11) **EP 0 749 057 B1**

(12) **EUROPEAN PATENT SPECIFICATION**

(45) Date of publication and mention
of the grant of the patent:
**03.12.2003 Bulletin 2003/49**

(21) Application number: **95940434.4**

(22) Date of filing: **14.12.1995**

(51) Int Cl.[7]: **G05B 13/02**, G05B 13/04

(86) International application number:
**PCT/JP95/02562**

(87) International publication number:
**WO 96/020438 (04.07.1996 Gazette 1996/30)**

(54) **METHOD AND SYSTEM FOR INFERENCE USING HIERARCHY MODEL, AND METHOD AND SYSTEM FOR CONTROL**

VERFAHREN UND VORRICHTUNG FÜR RÜCKSCHLÜSSE,WELCHE EIN HIERARCHISCHES MODELVERWENDET UND VERFAHREN UND VORRICHTUNG ZUR STEUERUNG

PROCEDE ET SYSTEME D'INFERENCE METTANT EN OEUVRE UN MODELE HIERARCHIQUE ET PROCEDE ET SYSTEME DE GESTION ASSOCIES

(84) Designated Contracting States:
**DE FR GB IT**

(30) Priority: **28.12.1994 US 364970**

(43) Date of publication of application:
**18.12.1996 Bulletin 1996/51**

(73) Proprietor: **OMRON CORPORATION**
**Kyoto-shi, Kyoto 616-8025 (JP)**

(72) Inventor: **ISAKA, Satoru**
**Omron Advanced System, Inc.**
**Santa Clara, CA 95054 (US)**

(74) Representative: **Wilhelms, Rolf E., Dr.**
**WILHELMS, KILIAN & PARTNER**
**Patentanwälte**
**Eduard-Schmid-Strasse 2**
**81541 München (DE)**

(56) References cited:
CA-A- 2 118 885          JP-A- 3 015 902
JP-A- 5 204 405          JP-A- 5 257 695
JP-A- 6 281 302          JP-A- 6 314 104

- **ON-LINE PROCESS SIMUL TECHNIQUES IND CONTROL, issued 1985, GRASTY R S, "Simulation of Large-Scale Control System by the Use of an Automated Hierarchical Methodology", pp. 97-106.**
- **PROG CYBERN SYST RES, Vol. 6, issued 1982, KELLERMAYR K H, "On Hierarchical Modelling of Large-Scale Systems", pp. 284-294.**
- **PROG CYBERN SYST RES, Vol. 6, issued 1982, CARLSSON C, "Adaptive Multigoal Control: An Approach to Applied Systems Analysis", pp. 195-208.**

## Description

### Technical Field

This invention relates to a reasoning system and method for building a model using historical data obtained when a human being operates or controls an object, particularly a model having a hierarchy structure constructed from mutually associated goals, strategies and actions. The invention relates further to a system and method for automatically operating or controlling an object using the model constructed.

The system and method according to the present invention finds use in factory automation, particularly real-time dynamic control operations in manufacturing and transportation facilities.

### Background Art

The goal of factory automation is to improve production efficiency by developing electromechanical devices and computer algorithms in order to process sensor signals and control actuators. A number of such devices and algorithms have relieved human beings from tedious, intensive, repetitive and often dangerous tasks. Nevertheless, human beings still engage in tasks that are desired to be automated in manufacturing and other industrial environments. Automation should be expedited in order to improve productivity, reduce cost, reduce waste, improve quality, improve labor safety and reduce training cost.

In a society based upon competitive manufacturing, where a wider variety of products are produced at a faster rate with better quality, more sophisticated means for factory automation are necessary. One of such means is an apparatus for building an automation model for human operation.

In the field of artificial intelligence (AI), which concerns human knowledge, there are many approaches with regard to modeling, namely how to build a model of such intelligence.

The most common approach is an expert system. An expert system expresses expert knowledge, which has been acquired through interviews, as a group of rules. The rules of one group are processed by a logical inference engine to produce explanations, predictions or suggestions. The logical inference mechanism involves a variety of methods inclusive of fuzzy logic. In general, rules represent knowledge at a conceptual or situational level.

An approach which is more data oriented is referred to as "case-based reasoning". This is a learning strategy in which cases are stored in memory and compared. More specifically, case-based reasoning interprets new situations by comparing and contrasting them with previous similar situations stored in memory. It recognizes new situations, makes new inferences and asks questions when inferences cannot be made. In general, cases express knowledge at an operational level.

Model-based reasoning methods are generally known from JP 6-281302 A, JP 5-257695 A, and JP 5-204405 A. Hierarchical modelling of large-scale systems is known from ON-LINE PROCESS SIMUL TECHNIQUES IND CONTROL, issued 1985, GRASTY R S, "Simulation of Large-Scale Control System by the Use of an Automated Hierarchical Methodology", pp. 97 - 106 and PROG CYBERN SYST RES, Vol. 6, issued 1982, KELLERMAYR K H, "On Hierarchical Modelling of Large-Scale Systems", pp. 284 - 294. An adaptive multigoal control in a framework formed by a multi-level hierarchical system as a basis for modelling multigoal production planning problems is known from PROG CYBERN SYST RES, Vol. 6, issued 1982, CARLSSON C, "Adaptive Multigoal Control: An Approach to Applied Systems Analysis", pp. 195 - 208. CA 2 118 885 A describes a process control system using a performance model for optimizing the process.

### Disclosure of the Invention

An object of the present invention is to provide a new approach broadened to cover both a rule-based approach and the case-based approach.

According to the present invention, the following action principle is fundamental to modeling the operation or control of an object by a human being and reproducing human operation or control by machine in accordance with the created model: "Some strategy exists for an action, and some goal exists for a strategy".

According to the present invention, a record of actual operation or control performed by a human being is adopted as an information source. By extracting strategies from the record and deducing goals from the strategies, a model of a hierarchy structure comprising goals, strategies and actions is constructed.

A reasoning method according to the present invention is defined in claim 1 and is as follows when expressed in its most general form:

Specifically, the reasoning method according to the present invention comprises steps of accepting a series of action data each comprising a set of input and output variable values obtained by operating or controlling an object; creating, for each input variable, in view of the input variable values in the accepted action data, a goal of the operation or control; creating, for each output variable, in view of the output variable values in the accepted action data, a strategy for attaining the goal; associating the goals with strategies which have not yet attained the goals; and associating the strategies with action data which implement them; thereby building a model of a hierarchy structure constructed from mutually associated goals, strategies and actions.

Conventional case-based reasoning stops at the experience level, namely at the action cases, and does not promise any possibilities beyond this. Suitable solutions are not obtained when cases for which there is no past experience arise.

According to the present invention, goals are created from actual action samples, and strategies for achieving these goals are created. The goals and strategies are then linked together. Accordingly, the aim ( goal) is determined at the conceptual level for the sake of operation or control, and decision making conforming to the situation is carried out by means of the strategy associated with the goal. Finally, concrete decision making (the deciding of output values) is performed by the action cases that are associated with the strategies.

In rule-based reasoning which includes fuzzy rules, it is necessary to interview experts and codify the knowledge acquired into rules in order to create the rules. According to the present invention, goals and strategies are created automatically from a record of past operations.

The reasoning method of the present invention as defined in claim 1 when expressed in more concrete form is as follows:

Specifically, the reasoning method according to the present invention comprises steps of accepting a series of action samples each comprising a set of input and output variable values obtained by operating or controlling an object; creating, for each input variable, a goal case stipulated using an initial value, a terminal value, a maximum value and a minimum value of the input variable value in the accepted action samples; extracting zones of input variables in which the output variable value in the accepted action samples remains fixed, and creating a strategy case, with regard to each zone, which links the zone of input variables to the output variable value; associating a strategy case, which possesses a zone of input variables that does not satisfy a condition of a goal case, with the goal case; and associating an action case, which possesses input variable values that fall within the zone of input variables in a strategy case, with the strategy case; thereby building a model of a hierarchy structure constructed from mutually associated goal cases, strategy cases and action cases.

In a preferred embodiment, the accepted action samples are converted to binary data of prescribed bits.

In another preferred embodiment, the step of creating a goal case includes a step of creating a provisional goal case, a step of outputting the provisional goal case and a step of adopting a goal case, after it has been evaluated by a user, as a final goal case.

The evaluation performed by the user includes adding, deleting or modifying goal cases.

More specifically, the step of creating strategy cases includes a step of creating strategy samples by successively comparing neighboring output variable values arrayed in a time sequence, and storing, when a change has occurred, the output variable values immediately before and immediately after the change, a step of converting the strategy samples to strategy cases, which possess a "do ⋯ when ⋯ until ⋯ min ⋯ max" format, by referring to the action samples, and a step of optimizing the strategy cases after conversion.

An example of the step for optimizing the strategy cases is to reduce the number of two or more strategy cases having identical output variable values.

In concrete terms, the linking of strategy cases and goal cases is implemented in memory by pointers to the goal cases provided for each of the strategy cases and pointers to the strategy cases provided for each of the goal cases.

In concrete terms, the linking of action cases and strategy cases is implemented in memory by pointers to the strategy cases provided for each of the action cases and pointers to the action cases provided for each of the strategy cases.

An action case is created by leaving one and deleting the others of action samples comprising sets of all identical input and output variable values.

The model thus created is verified by using the above-mentioned series of action samples as input/output data.

More specifically, verification is performed by steps of accepting the action samples one at a time in the time sequence thereof; finding goal cases having conditions not satisfied by the input variable values of an accepted action sample and listing strategy cases associated with the goal cases found; finding, from among the strategy cases listed, a strategy case having a condition satisfied by the accepted input variable values and listing action cases associated with the strategy case found; and, from among the action cases listed, outputting an output variable value of an action case having input variable values that agree with or are nearest to the accepted input variable values. This output value and the output variable value of the action samples is compared by the user, whereby the model is verified.

The present invention provides also a system which executes the above-described method. The system is as defined in claim 11.

The system as defined in claim 11 comprises means for accepting and storing a series of action samples each comprising a set of input and output variable values obtained by operating or controlling an object; means for creating, for each input variable, a goal case stipulated using an initial value, a terminal value, a maximum value and a minimum value of the input variable value in the accepted action samples; means for extracting zones of input variables in which output variable value in the accepted action samples remains fixed, and a creating strategy cases, with regard to each zone, which links the zone of input variables to the output variable value; means for associating a strategy case, which possesses a zone of input variables that does not satisfy a condition of the goal case, with the goal case; and means for associating an action case, which possesses input variable values that fall within the zone of input variables in a strategy case, with the strategy case; whereby a model of a hierarchy structure constructed from mutually associated goal cases, strategy cases and action cases is built.

Other features and advantages of the present invention will be obvious in the description of the embodiments rendered with reference to the accompanying drawings.

## Brief Description of the Drawings

Fig. 1 is a block diagram showing the overall configuration of a system which includes a controlled objected in a modeling mode;

Fig. 2 is a block diagram showing the overall configuration of a system which includes a controlled objected in a problem-solving mode;

Fig. 3 is a block diagram showing an example of the construction of a system according to the present invention, in which use is made of hierarchy model;

Fig. 4 is a perspective view showing a crane control system as an example of a controlled object;

Fig. 5 illustrates another example of an arrangement for detecting angle of sway;

Fig. 6 is a block diagram showing a system for simulating crane control;

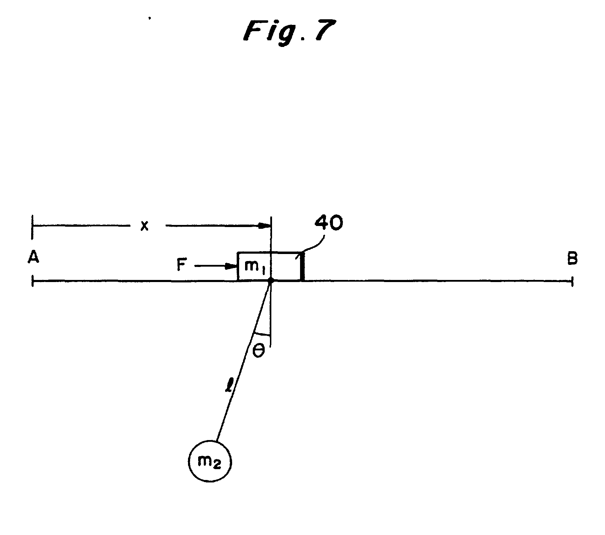

Fig. 7 illustrates variables in the simulation;

Figs. 8a and 8b are flowcharts showing a processing procedure in a modeling mode;

Fig. 9 illustrates an example of input and output data obtained in simulation of crane control;

Fig. 10 illustrates binary strings obtained by the binary encoding the input and output data shown in Fig. 9;

Fig. 11 illustrates an example of a list, which is for creating goal cases, created for each input variable in simulation data for crane control;

Fig. 12 illustrates an example of goal cases in crane control;

Fig. 13 illustrates an example of strategy samples in crane control;

Figs. 14 through 16 illustrate a simple example for describing conversion of strategy samples to strategy cases, in which Fig. 14 shows an example of action samples, Fig. 15 an example of strategy samples and Fig. 16 a graph of action samples;

Fig. 17 is a graph of action samples in crane control;

Figs. 18a and 18b show an example of strategy cases in crane control;

Fig. 19 illustrates the binary strings of the strategy cases of Figs. 18a and 18b;

Fig. 20 illustrates the linkage of each goal case to strategy cases;

Fig. 21 illustrates the linkage of each strategy case to goal cases and action cases;

Fig. 22 illustrates the linkage of each action case to strategy cases;

Fig. 23 illustrates a hierarchy structure comprising goals, strategies and actions;

Fig. 24 is a flowchart showing a processing procedure in a problem-solving mode; and

Fig. 25 shows an example of input and output data in the problem-solving mode.

## Best Mode for Carrying Out the Invention

(1) Two modes in one system

The system according to the present invention using a hierarchy model possesses two modes. The first is a modeling mode and the second is problem-solving mode.

In the modeling mode, data (manipulated variables and controlled variables) obtained when a controlled object (a system to be controlled) is actually operated by a human being (an operator) are entered and a model having a hierarchy structure, described below, is constructed.

In the problem-solving mode, the controlled object is actually controlled in accordance with a model already constructed.

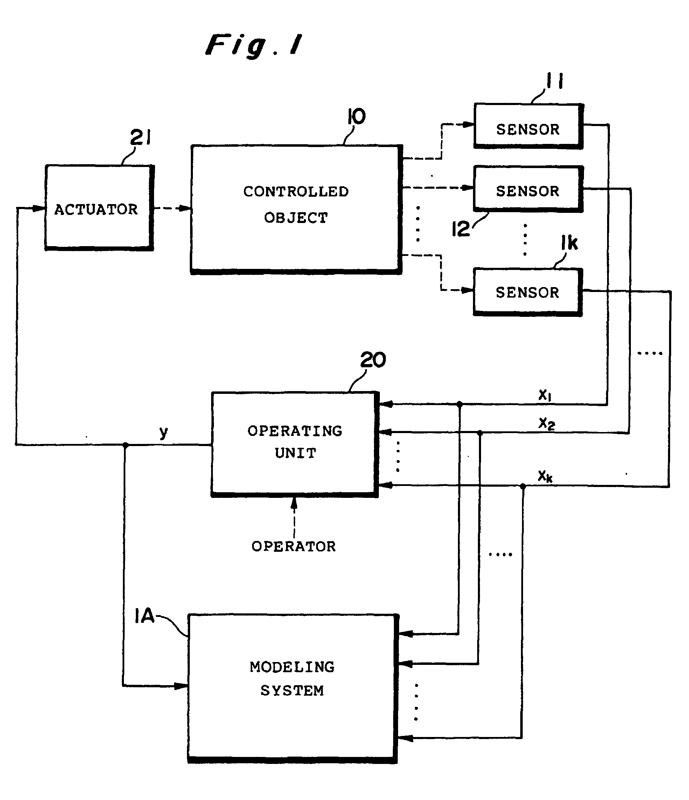

Fig. 1 is a block diagram showing the overall configuration of a system which includes a controlled objected in the modeling mode. The system according to the present invention is embodied as a modeling system (or a learning system).

In general, the controlled variables of a controlled object (system to be controlled) 10 are sensed by sensors 11, 12, ···1k. The sensed controlled variables ($x_1$, $x_2$, ··· $x_k$) are applied to an operating unit 20. While observing the status of the controlled object and, when necessary, while observing the values of the controlled variables displayed (e.g., while checking the position of a needle on a meter), the operator manipulates (operates) the system in such a manner that the controlled object will attain a desired state. A manipulated variable y (output data) (which is not limited to one type) outputted by the operating unit 20 is applied to an actuator 21, which actually drives or operates the controlled object 10. There may be instances in which some or none of the controlled variables $x_1$, $x_2$, ···, $x_k$ are applied to the actuator 20. The controlled variables may be logical values (or computed values or inferred values), which would be obtained from the controlled object 10.

The controlled variables $x_1 \sim x_k$ detected by the sensors 11 - 1k and the manipulated variable y outputted by the operating unit 20 enter a modeling system 1A. It may be so arranged that the output of the actuator 21 or a measured value thereof enters the modeling system 1A as the manipulated variable. The modeling system 1A uses the input data $x_1 \sim x_k$ and the output data y to create a model relating to control (or operation).

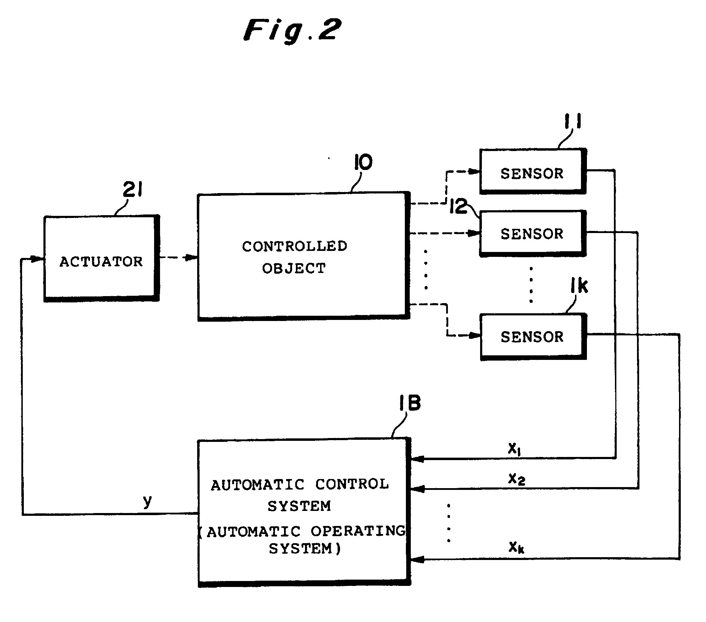

Fig. 2 illustrates the overall configuration of a system which includes a controlled object in the problem-solving mode. The system according to the present invention is embodied as an automatic control system (automatic operating system) 1B.

The automatic modeling system 1B accepts the controlled variables $x_1 \sim x_k$ of the controlled object 10 sensed by the sensors 11 $\sim$ 1k and calculates the manipulated variable y, which is to be applied to the controlled object 10, in accordance with the model created previously. The controlled variable y is applied to the actuator 21 that drives the controlled object 10 (or the actuator 21 is controlled in such a manner that its output will attain the calculated value). As a result, the controlled object 10 is controlled (operated) by the automatic control system 1B in the same manner that the operator controlled (operated) the controlled object using the operating unit 20.

(2) System configuration and example of application

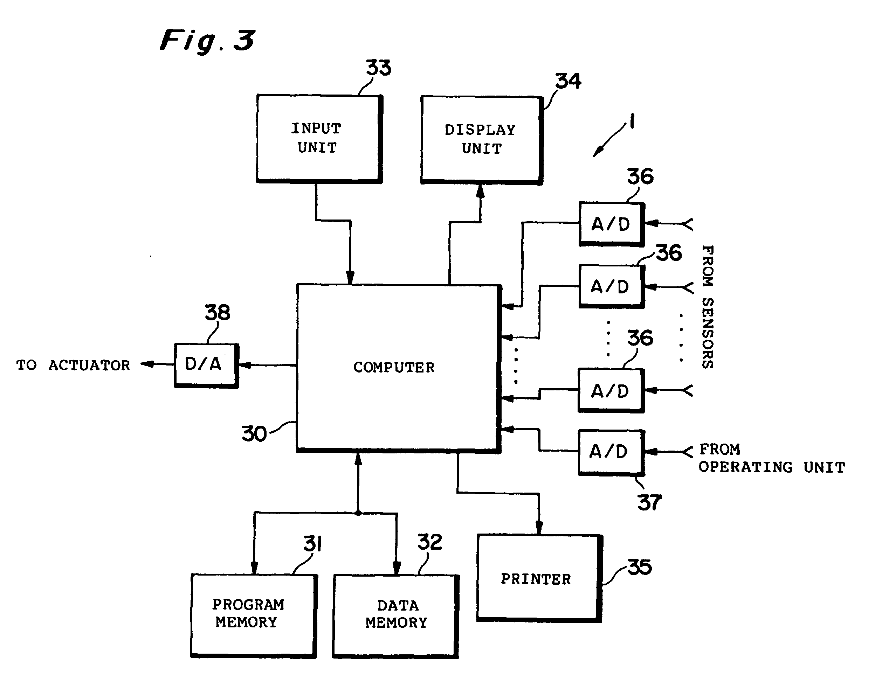

Fig. 3 illustrates an example of the configuration of a system using a hierarchy model according to the present invention embodied as the modeling system or automatic control system, depending upon the particular mode.

This system basically is implemented by a computer 30. The computer 30 utilized can be a personal computer or any other general-purpose computer irrespective of whether it is a large- or small-scale computer.

The computer 30 is provided with a program memory 31 storing programs for executing processing in the modeling mode and problem-solving mode, and a data memory 32 for storing data (inclusive of data representing a model) generated or used in these processing operations. The memories 31, 32 are implemented by a ROM, RAM, hard disk, floppy disk, optical disk, etc. The memories 31 and 32 may both be implemented by hard disks, the memory 31 by a ROM and hard disk or floppy disk, and the memory 32 by a RAM and hard disk. Here the memories 31 and 32 are conceptions classified by the type of data stored.

An input unit 33 is connected to the computer 30, as well as a display unit 34 and a printer 35 that serve as output units. The input unit 33 includes a keyboard and a mouse. The display unit 34, which displays menu screens, may also be considered as part of the input unit 33. At least one of the display unit 34 and printer 35 (preferably the display unit 34) will suffice as the output unit.

Also connected to the computer 30 are A/D converters 36 for converting the controlled variables (usually analog quantities) of the controlled object 10 sensed by the sensors 11 - 1k to digital data, an A/D converter 37 for converting the manipulated variable (if it is an analog quantity), which is outputted by the operating unit 20 in the modeling mode, to digital data, and a D/A converter 38 for converting the manipulated variable (usually a digital value), which is calculated and applied to the actuator 21 in the problem-solving mode, to an analog quantity as necessary. These A/D converters and D/A converters can be utilized as internal converters of the computer. Further, if the A/D converters and D/A converters are unnecessary, they need not be provided. For example, if the actuator is one which accepts digital quantities, the D/A converter 38 is unnecessary.

The computer 30 would be provided with interfaces (differentiating circuits and the like, described later) as necessary for entering controlled variables or manipulated variables and for outputting manipulated variables.

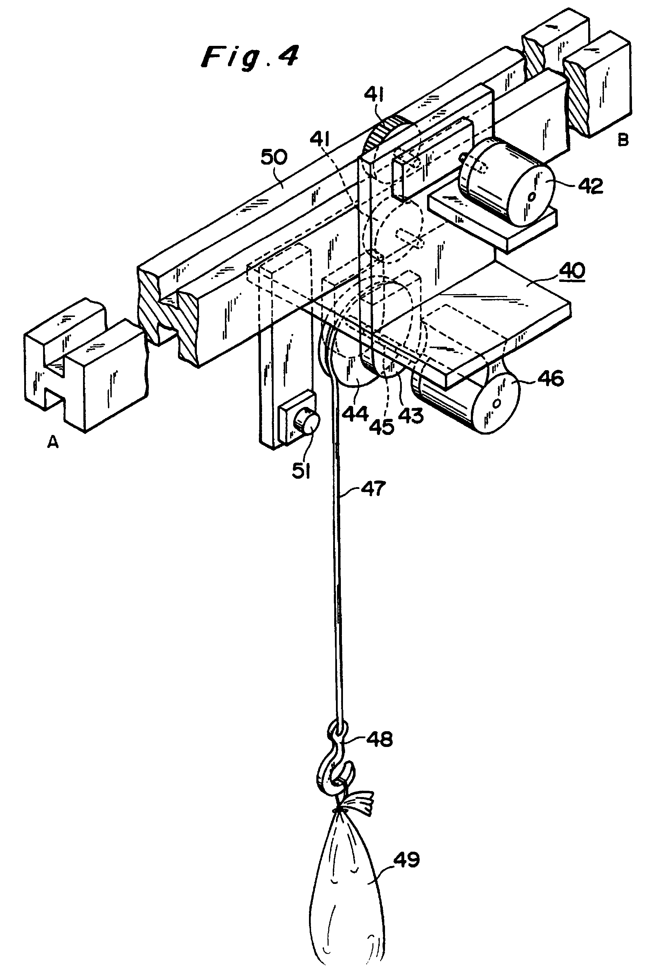

Fig. 4 illustrates a crane control system as an example of the controlled object. For the sake of simplicity, the crane system is one which includes only one rail 50.

The one rail 50 is suspended horizontally at a suitable height. A trolley 40 is supported on the rail 50 by wheels 41 so as to be free to move. The wheels 41 are rotatively driven by a motor 42 directly or via a reduction mechanism.

The trolley 40 is further provided with a hoist. The hoist includes a pulley 44, a hoist motor 46 which drives the pulley 44, and a wire 47 wound round the pulley 44. The pulley 44 is secured to a rotary shaft 45 received freely rotatably by brackets 43 fixed to the trolley 40. The rotary shaft 45 is rotatively driven by a motor 46 directly or via a reduction mechanism. Attached to the lower end of the wire 47 is a hook 48 from which a load 49 is suspended.

Assume the following crane control: The suspended load 49 is carried by causing the trolley 40 to run from one point A to another point B on the rail 50. At this time the travel of the trolley 40 is controlled in such manner that the angle of sway of the wire 47 (the angle of sway in the direction in which the trolley 40 moves) will be as small as possible (i.e., in such a manner that the angle of sway will fall within a predetermined angular range, which shall be referred to as the "maximum allowable angle of sway").

The position of the trolley 40, the angle of sway and a differentiated value of the angle of sway are employed as the controlled variables.

The position of the trolley 40 is taken as being in the positive direction, namely the direction toward the end point B, with the starting point A serving as the origin. This position is sensed by a rotational transducer (not shown) provided on the rotary shaft of the motor 42 or on the shaft of one of the wheels 41. A pulse train (or digital data representing position) outputted by the rotational transducer enters the computer 30 (here the A/D converter 36 would be unnecessary). If necessary, an origin sensor which senses that the trolley 40 is located at the starting point A may be provided.

The angle of say of the wire 47 is sensed by a television camera 51, which is mounted on the trolley 40 and so arranged as to capture an image of the wire 47, and a processing unit for applying image processing to the video signal from the camera 51. This image processing unit may be implemented by part of the computer 30, in which case the video signal from the camera 51 would be accepted by the computer 30 via an A/D converter 36. Image processing for sensing the angle of a linear object with respect to a perpendicular can be performed by a well-known technique.

The differentiated value of the angle of sway can be computed by the computer 30.

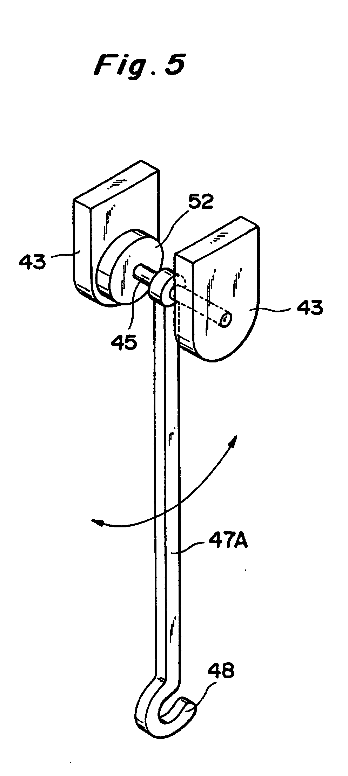

In a case where the load is suspended using a shaft 47A instead of the wire 47, as shown in Fig. 5, the angle of sway is sensed more simply. The shaft 47A has its upper end secured to the shaft 45. The latter is freely rotatably supported on the brackets 43. The lower end of the shaft 47A forms a hook 48. The angle of rotation of the shaft 45 is sensed by an angle sensor 52. If the output signal of the angle sensor 52 is an analog quantity, then this is converted to a digital quantity by an A/D converter 36 before it is accepted by the computer 30. Further, the output signal from the angle sensor 52 is differentiated by a differentiating circuit, and the differentiated signal is accepted by the computer 30, via an A/D converter 36, as the differentiated value of the angle of sway. The differentiation processing can be performed by the computer 30 as a matter of course. If the output produced by the angle sensor 52 is a digital quantity, this is accepted by the computer 30 as is.

The manipulated variable is the traveling speed of the trolley 40. The traveling speed can be expressed as the voltage or current applied to the motor 42 which transports the trolley.

This system according to the invention is applicable also to a controlled object devoid of sensors which sense controlled variables or an actuator to which a manipulated variable is applied. One example is a system for predicting the price of stock. In such case, the input data would be the prevailing stock price (regarding each issue) or the prevailing average stock price and would be entered from a keyboard, a communication device or a floppy disk drive, etc. The output data would be a decision to sell, a decision to buy and the amount of shares involved. These items of data would be outputted on the display unit or printed out by the printer.

Another example is a system for predicting sales at a store. Here the input data would be the day of the week, the weather and inventory, etc., and would be entered from a keyboard, a communication device or a floppy disk drive, etc. The output data would be predicted sales, amount of purchases to be made, etc., and would be outputted on the display unit or printed out by the printer.

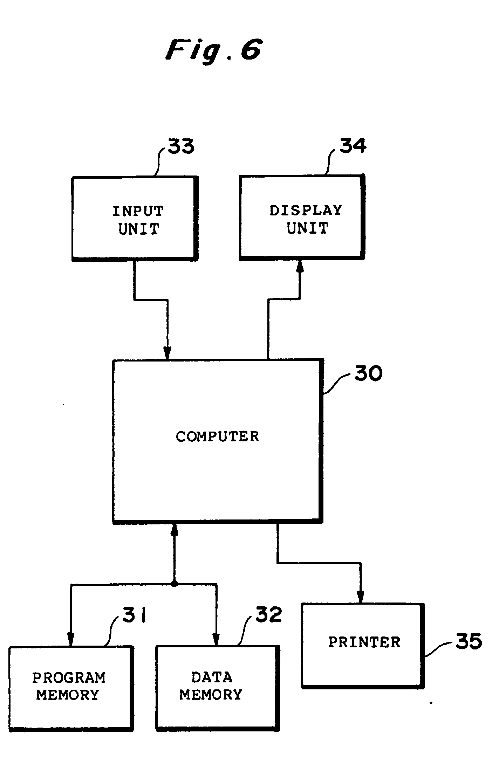

The crane control system mentioned above will be taken as an example in the description of the modeling mode and problem-solving mode set forth below in detail. The actual operating data used in the modeling mode is data obtained by simulation. An example of the simulating system is depicted in Fig. 6. This system is constituted by the computer 30, the program memory 31, the data memory 32, the input unit 33, the display unit 34 and the printer 35. Processing in the problem-solving mode also is executed in this system. Fig. 6 can be said to illustrate the minimum structure of the system according to the present invention (though it will suffice as a manner of course if only the display unit or printer is provided as the output unit).

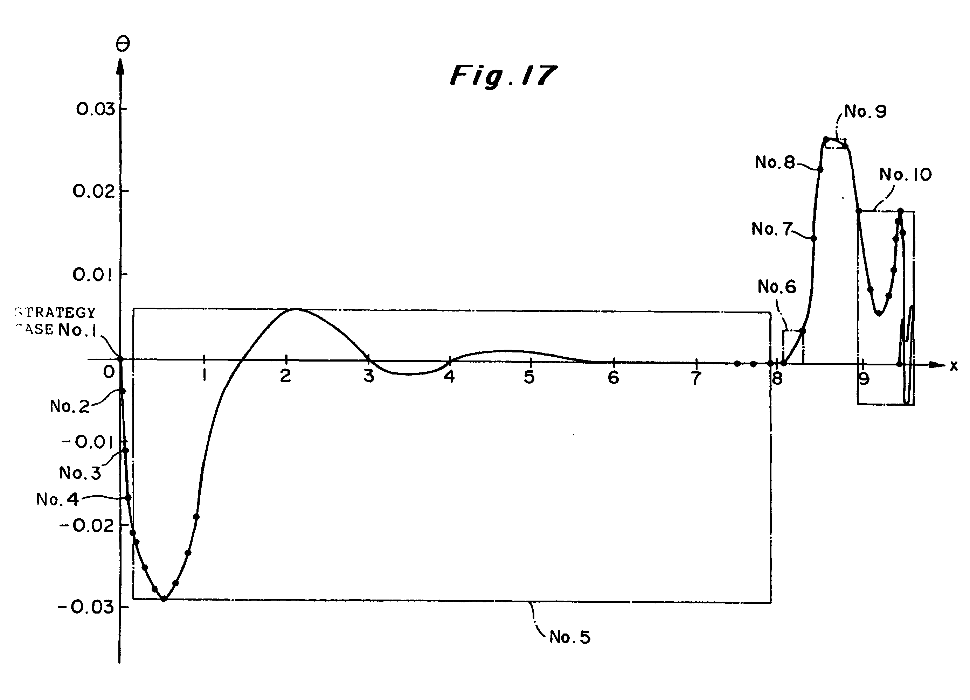

In the simulation, the equations for computations used to obtain the position x of the trolley and the sway angle θ are as follows (see Fig. 17):

$$\frac{d^2x}{dt^2} = \left(\frac{m_2}{m_1}\right) \cdot g \cdot \theta + \frac{F}{m_1} + \left(\frac{m_2}{m_1}\right) \cdot \ell \cdot \left(\frac{d\theta}{dt}\right)^2 \cdot \theta$$

$$\frac{d^2\theta}{dt^2} = \left(\frac{m_1+m_2}{m_1\ell}\right) \cdot g \cdot \theta - \frac{F}{m_1\ell} - \frac{m_2}{m_1} \cdot \left(\frac{d\theta}{di}\right)^2 \cdot \theta$$

where $m_1$ represents the mass of the trolley, $m_2$ the mass of the suspended load, $\ell$ the length of the rope, g acceleration due to gravity and F the thrust provided by the motor, which is obtained by the following equation:

$$F = K_1\omega_1 + K_2\omega_2 + K_3V$$

where the following hold:

$$\omega_1 = V^d - V$$

$$\omega_2 = \int_0^t \omega_1(\tau)\,d\tau$$

Here $K_1$, $K_2$ and $K_3$ are constants.

Further, V represents the motor velocity and $V^d$ the target velocity of the motor which is the manipulated variable given by the operator in the simulation. Specifically, $V^d$ takes on the following values:

$$V^d = \{-40 \text{ (m/min)}, 0, 40 \text{ (m/min)}\}$$

(3) Processing in the modeling mode

This section and the next section "(4) Processing in the problem-solving mode" are executed mainly by the computer 30. Accordingly, unless stated otherwise, the specific processing set forth below should be understood as being processing executed by the computer 30.

The model has a hierarchy structure comprising three levels, namely a goal, a strategy and an action. This structure is based upon the following principle:

"For each and every action, there is at least one strategy associated with it, and for each and every strategy, there is at least one goal associated with it."

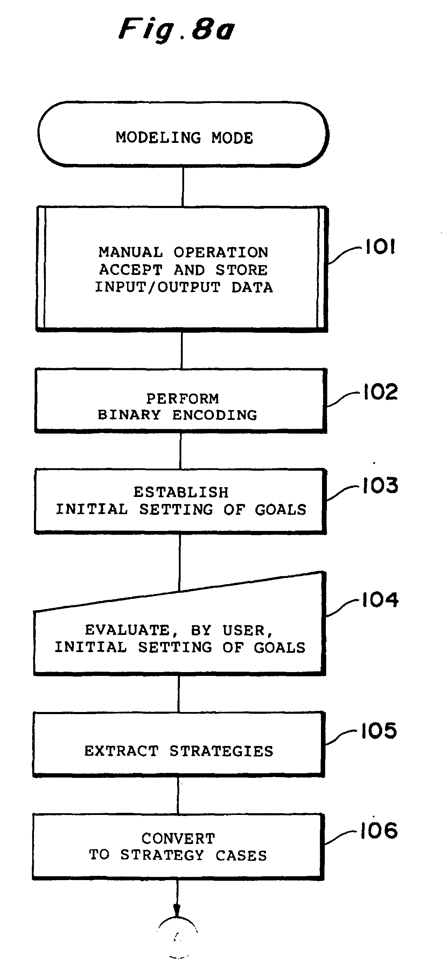

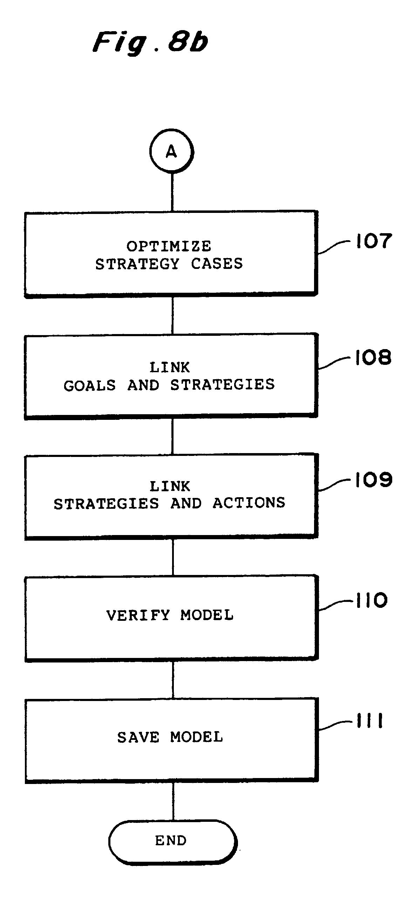

The procedure for specific processing in the modeling mode will be described with reference to Figs. 8a and 8b.

Step 101

The operator actually manipulates (operates) the controlled object 10 using the operating unit 20. At this time the controlled variables (input data) obtained from the sensors 11 - 1k and the manipulated variable (output data) applied to the actuator 21 are sampled at fixed time intervals and fed into the computer 30. These items of input and output data are saved in the data memory 32 as teaching data and represent a record of actual operation.

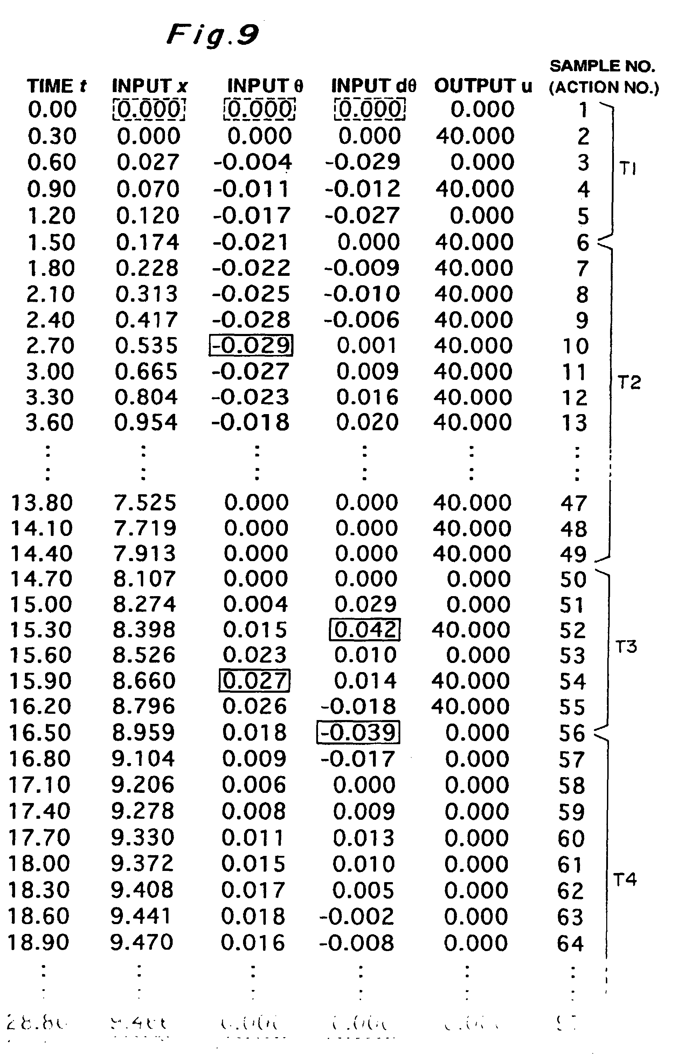

Fig. 9 illustrates an example of input and output data obtained in the simulation of the above-described crane control system.

The input and output data is sampled every 0.3 sec. As mentioned above, the crane runs under three types of operations, namely forward, reverse and stop. The operation output (trolley traveling speed: output data) u is set to be equal to +40 (m/min) in forward operation, -40 (m/min) in reverse operation and 0 (m/min) in the stopping operation. The items of input data are trolley position x (m), sway angle $\theta$ (rad) of the wire and rate of change (differentiated value) $d\theta$ of the angle of sway. (Hereinafter, $d\theta/dt$ will be represented by $d\theta$).

In Fig. 9, a length of time indicated by T1 is the start-up time of the trolley. In this time period the operation output u is so adjusted that the sway angle $\theta$ falls within a range that is as small as possible. The trolley runs at a constant speed during the length of time indicated by T2. In order to stop the trolley exactly at the target point B, the operation output u is adjusted in during a length of time indicated by T3. A length of time T4 shows a process in which the trolley substantially arrives at the point B and the sway angle $\theta$ of the suspended load is gradually attenuated.

Step 102

The input/output data is binarized and converted so as to form binary strings. Each binary string is referred to as an "action sample".

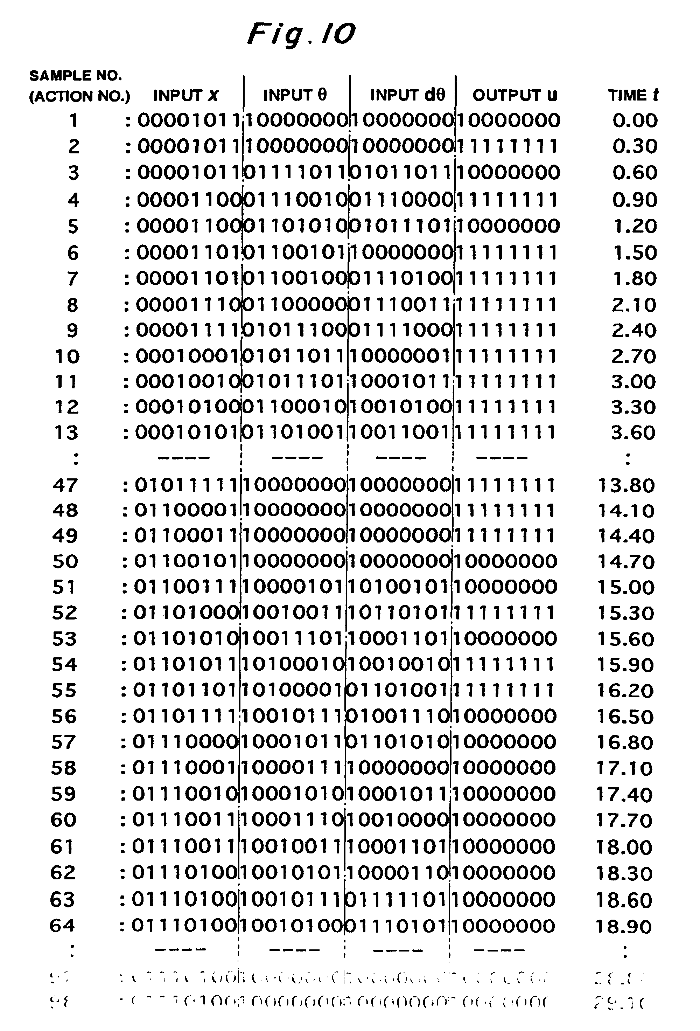

The binary strings of the input/output data illustrated in Fig. 9 are shown in Fig. 10. The items of input data x, θ, dθ and output data u are composed of eight bits each.

In this encoding processing, minimum values are converted to 00000000 and maximum values 11111111 for input and output variables. The minimum and maximum values of position x are -1 (m) and 22 (m), respectively. The minimum and maximum values of sway angle θ are -0.1 (rad) and +0.1 (rad), respectively. The minimum and maximum differentiated values of dθ are - 0.1 (rad/sec) and +0.1 (rad/sec), respectively. The minimum and maximum values of traveling speed u are -40 (m/min) and +40 (m/min), respectively. In order to make Fig. 10 easier to comprehend, it should be added that position x = 0 (m), sway angle θ = 0 (rad), sway-angle differentiated angle value dθ = 0 (rad/sec) and traveling velocity u = 0 (m/min) are represented by the binary values 00001011, 10000000, 10000000 and 10000000, respectively.

Binary encoding is particularly meaningful when the processing program for the modeling mode has been written in a sophisticated language. The first reason for binary encoding is that the resolution of the action samples can be changed with ease. For example, by discarding the eight lower order bits of 16-bit data, a resolution of eight bits can be obtained. The second reason for binary encoding is that the method of representation best suited to a genetic algorithm, which is one optimization algorithm, is a binary string.

Step 103

Sub-step 103-1

First, an initial action sample and a terminal action sample are extracted for each and every input variable, and the extracted action samples are compared by finding the difference between them. Further, a maximum value and a minimum value are calculated for each and every input variable.

In the example shown in Fig. 9, the action sample of each input variable at time t = 0.00 is the initial action sample (value) of the input variable and the action sample of each input variable at time t = 29.10 is the terminal action sample (value) of the input variable. These initial and terminal action samples are enclosed by the rectangles indicated by dashed lines. Further, the maximum and minimum values of the input variables θ, dθ are enclosed by the rectangles indicated by solid lines. The maximum and minimum values of the input variable x are terminal and initial values enclosed by the rectangles indicated by the dashed lines.

Sub-step 103-2

A list of results obtained at step S103-1 is created. This list naturally is created in the data memory 32.

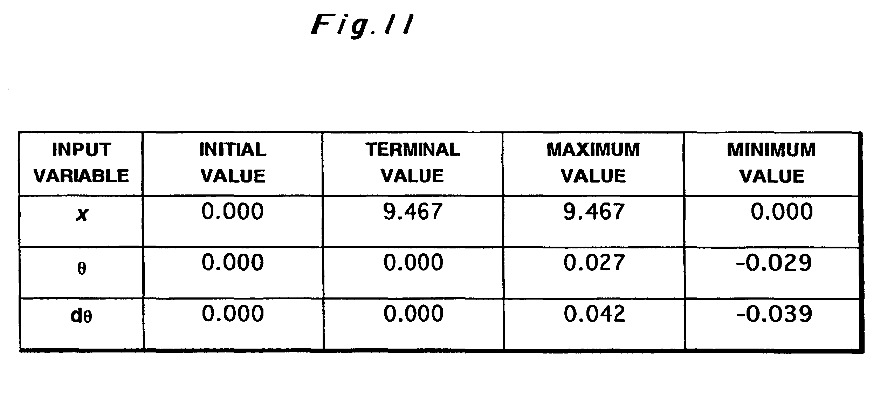

A list of the results obtained with regard to the example of Fig. 9 is illustrated in Fig. 11.

Sub-step 103-3

If (maximum value) - (minimum value) = 0 holds, then this input variable is disregarded. This input variable is masked.

The reason for masking is that an input variable whose maximum and minimum values are equal undergoes no change whatsoever in the operation of the controlled object; such an input variable has absolutely no influence upon operation or control.

Sub-step 103-4

In a case where the difference between the initial value and the terminal value is non-zero, then goal conditions regarding this input variable are expressed as follows:

goal j : $x_i$ :     xvalue of "terminal state" = (terminal value)
goal j+i : $x_i$ :     range of "transitional state" = [min, max]

The fact that the initial and terminal values regarding the input variable $x_i$ differ in actual operation of a controlled object means that this operation must have been carried out (by the operator) with the intention of changing the input variable $x_i$ from the initial value to the terminal value. It can be surmised that the operation must have been carried out with the intention of making the range of fluctuation in the input variable $x_i$ fall between the minimum value and the maximum value. Accordingly, this means that the goal (the purpose of control) with regard to the input variable $x_i$ is to eventually bring the value of the input variable $x_i$ to the terminal value starting from the initial value, at which time it is so arranged that the range of fluctuation in $x_i$ falls between the minimum value and the maximum value.

In the example shown in Fig. 11, the initial and terminal values differ for the input variable x. Accordingly, the following goal conditions are provisionally established in regard to the input variable x:

Goal 1 : x :     value of "terminal state" = 9.467
Goal 2 : x :     range of "transitional state" = [0.000, 9.467]

Sub-step 103-5

In a case where the difference between the initial and terminal values is zero, the goal condition regarding this input variable is written as follows:

goal j : $x_i$ :     range of "transitional state" = [min, max]

In a case where the initial value and terminal value regarding a certain input variable are the same, a goal cannot be deduced from either the initial value or the terminal value. In such case, it would be inferred that the intention was to hold the input variable within a fixed range in the course of operation. This is the meaning of the goal conditions mentioned above.

The initial value and terminal value are the same (both are 0.000) for the sway angle θ and differentiated value dθ thereof in the example illustrated in Fig. 11. Accordingly, the following goal conditions are provisionally established in regard to the input variables θ, dθ:

Goal 3 : θ :     range of "transitional state" = [-0.029, 0.027]
Goal 4 : dθ :     range of "transitional state" = [-0.0329, 0.042]

Sub-step 103-6

The results of the above-described sub-steps 103-3, 103-4 and 103-5 are printed out by the printer 35 or displayed on the display unit 34.

Sub-step 103-7

The above-mentioned goal conditions are encoded into binary strings in the following array:
"Goal No. Input Variable Type Flag Value(s)"
This array will be described in greater detail in the description of step 104, which is next.

Step 104

The operator observes the goal hypotheses (the goals 1 - 4 provisionally established) printed by the printer 35 or displayed on the display unit 34, evaluates these hypotheses and adds new goal conditions to these, deletes any goal condition or modifies goal conditions as necessary.

In the example of the crane control system, goal 2 in the established hypotheses (goals 1 - 4) is deleted as being unnecessary. The reason for this is that goal 2 relates to the range of the transitional state of the input variable x (which represents position). Since the position x need only be increased monotonously from the initial value to the terminal value, the goal hypothesis concerning the range of the transitional state is unnecessary. As a result, the goal numbers of goals 3 and 4 are each moved up by one to make these goals 2 and 3, respectively.

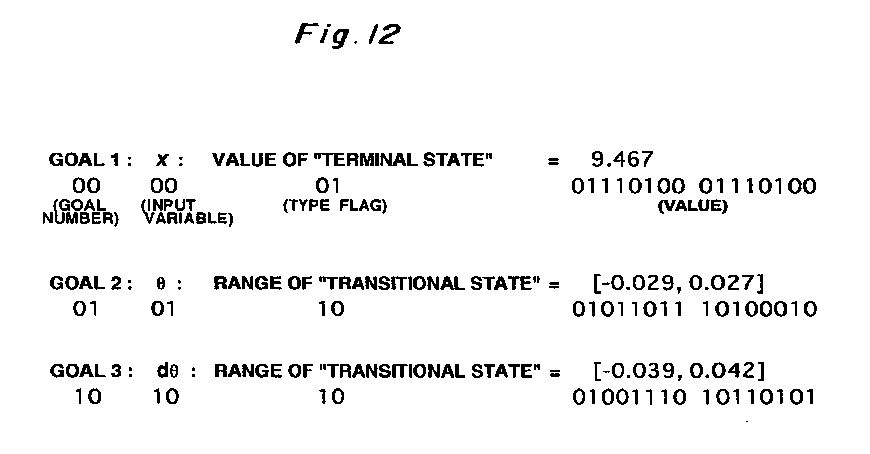

What are finally obtained through the process of evaluation by the operator are goal cases. In the example given above, the three goal cases eventually obtained are illustrated in Fig. 12 along with their binary strings.

The array of the items in the binary strings and the binary data will be described (see sub-step 103-7).

The numbers 1, 2, 3 of the goals 1, 2, 3 at the head of the arrays are "goal case numbers (goal numbers)", and each is represented by two bits.

The immediately following x, θ, dθ are the types of "input variable", and each is represented by two bits. Specifically, x is 00, θ is 01 and dθ is 10.

The third item "type flag" represents either the value of the "terminal state" or the range of the "transitional state". The type flag is composed of two bits, with the value of the "terminal state" being represented by 01 and the range of the "transitional state" being represented by 10.

The last "value(s)" differs depending upon the type flag. If the type flag is 01, the "value" is the "terminal value" (represented by eight bits). Since there is only one "terminal value", this eight-bit data is repeated twice. If the type flag is 10, the "values" are 16-bit data arrayed in the order of the minimum value and maximum value (each of which is represented by eight bits) (see Figs. 9, 10 and 11).

Step 105

A strategy is extracted by comparing action samples with regard to the output variable.

More specifically, the initial value and terminal value of the output variable are stored in the data memory 32. This is followed by comparing the output data (action sample) at time t and the output data at the next sampling time t+1. If these items of output data differ, then the item of output data at time t and the item of output data at time t+1 are stored. This processing is repeated while incrementing the value of t from t = 0 to t = terminal time. The items of data thus stored in memory are referred to as "strategy samples".

The strategy samples of the crane control system will now be described in detail. Reference will be had to the binary strings shown in Fig. 10.

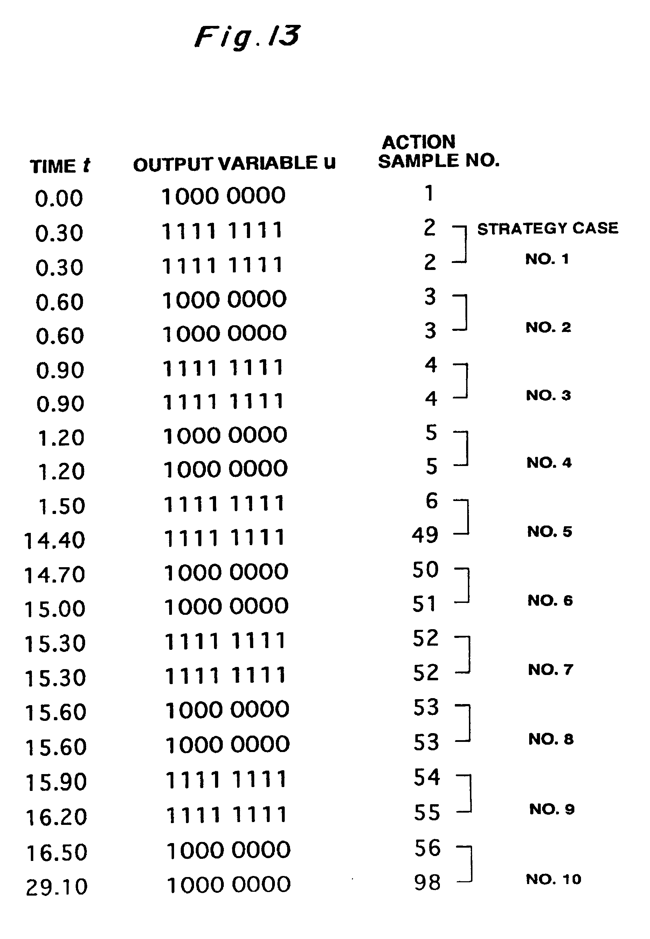

Fig. 13 illustrates the strategy samples of the crane control system. Here Time t and Action Sample No. also are shown for the sake of reference.

The initial value 10000000 of the output variable (time t = 0.00, Sample No. = 1) and the terminal value 10000000 (time t = 29.10, Sample No. 98) are stored in memory.

Since the output variable value 10000000 at time t = 0.00 and the output variable value 11111111 at time t = 0.30 differ, the output variable value at time t = 0.30 is stored (the output variable value at time t = 0.00 has already been stored).

The output variable value 11111111 at time t = 0.30 and the output variable value 10000000 at time t = 0.60 are compared. Since these values are different from each other, the values are stored.

Similarly, the value at time t = 0.60 and the value at time t = 0.90 differ from each other, the value at time t = 0.90 and the value at time t = 1.20 differ from each other and so do the value at time t = 1.20 and the value at time t = 1.50. These values, therefore, are stored.

The values from that at time t = 1.50 to time t = 14.40 are identical. Accordingly, the output variable values at these times are not stored.

The value at time t = 14.40 and the value at time t = 14.70 differ. Accordingly, the output variable values at these times are stored.

The value at time t = 14.70 and the value at time t = 15.00 are identical. Accordingly, the output variable values at these times are not stored.

The value at time t = 15.00 and the value at time t = 15.30 differ from each other, the value at time t = 15.30 and the value at time t = 15.60 differ from each other and so do the value at time t = 15.60 and the value at time t = 15.90. These values, therefore, are stored.

The value at time t = 15.90 and the value at time t = 16.20 are identical and, hence, these values are not stored.

The value at time t = 16.20 and the value at time t = 16.50 differ and therefore are stored.

The values of the output variables from time t = 16.50 onward are all the same until the terminal time t = 29.10 and therefore are not stored.

Thus, the positions at which the output variable changes are found and the output variable values at the points in time immediately before and immediately after each of these positions are stored in memory.

In the example given above, the description deals solely with a case in which the output variable is of one type. However, the procedure is the same even if the output variables are of a plurality of types. In such case operation is such that if the value of any one output variable changes, this is regarded as a change in the output variables and the values of all of the output variables immediately before and immediately after this change are stored.

Step 106

The strategy samples thus extracted are converted to strategy cases, which have the following format, upon referring to the action samples:

"do ⋯ when ⋯ until ⋯ min ⋯ max ⋯"

The value of the output variable (of one or a plurality of types) follows "do"; "when" is followed by the value (one or a plurality of values) of the input variable; and "until" also is followed by the value of the input variable. Further, minimum values regarding each of the input variables are arrayed after "min", and the maximum values regarding each of the input variables are arrayed after "max".

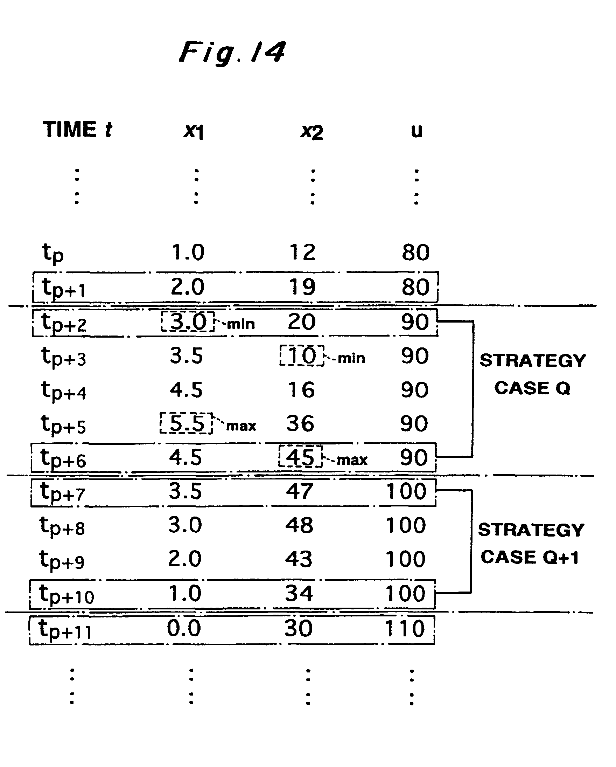

This will be described using a simple example while referring to Figs. 14 through 16. In these Figures, the input variables are of two types, namely $x_1$, $x_2$, and the output variable is of one type, namely u. Time is indicated at $t_p \sim t_{p+11}$.

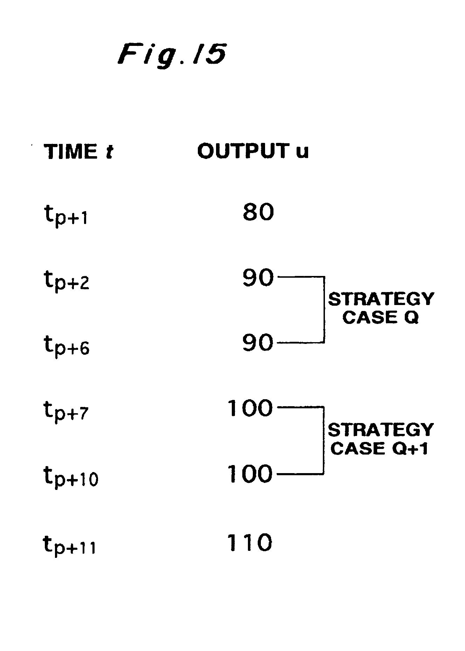

Fig. 14 shows a simple example of action samples. Strategy samples created on the basis of the action samples in Fig. 14 are illustrated in Fig. 15. With regard to the output variable in Fig. 14, the acquisition of the strategy samples of Fig. 15 by the extraction of the values of the output variable at the points in time immediately before and after any change in the output variable is as described above in step 105.

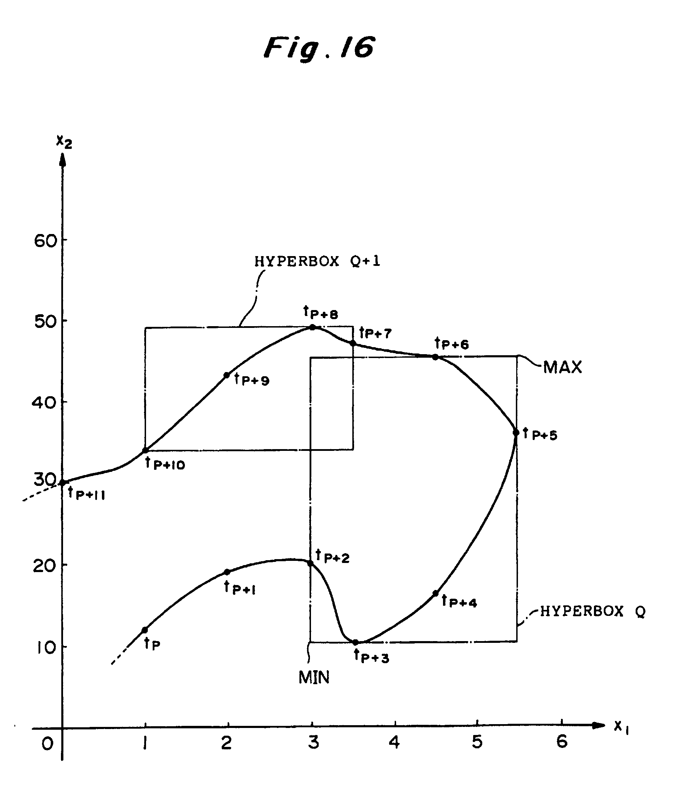

Fig. 16 is a graph of the action samples in the input-variable space. The input variables $x_1$, $x_2$ are plotted along respective ones of two orthogonal axes. Zones within which the output variable u maintains a fixed value are indicated by the rectangles.

In three-dimensional input-variable space formed when there are three types of input variables, a zone in which the output variable indicates a fixed value is represented by a rectangular parallelepiped. In four-dimensional input-variable space, the zone is represented by a hyperbox. In the description that follows, the term "hyperbox" is used with regard all cases, inclusive of the rectangle and rectangular parallelepiped, irrespective of whether the input-variable space is two-dimensional or three-dimensional.

In Fig. 16, a hyperbox Q is a zone within which the output variable u is 90, and a hyperbox Q+1 is a zone within which the output variable u is 100.

The set of input and output variables defining one hyperbox is referred to as a strategy case. If the strategy case Q is taken as an example, this strategy case is expressed as follows:

| do u = 90 | when | $x_1 = 3.0,$ | $x_2 = 20$ |
|---|---|---|---|
| | until | $x_1 = 4.5,$ | $x_2 = 45$ |
| | min | $x_1 = 3.0,$ | $x_2 = 10$ |
| | max | $x_1 = 5.5,$ | $x_2 = 45$ |

The meaning of this is as follows:

"When the inputs are $x_1 = 3$, $x_2 = 20$, make the output u 90 until $x_1 = 4.5$, $x_2 = 45$ is established. However, the input $x_1$ has an allowable range from a minimum value 3.0 to a maximum value 5.5, and the input $x_2$ has an allowable range from a minimum value 10 to a maximum value 45."

One vertex of the hyperbox Q is represented by the minimum value of $x_1$ and the minimum value of $x_2$ (this point is indicated by MIN in Fig. 16), and the diagonally opposite vertex is represented by the maximum value of $x_1$ and the maximum value of $x_2$ (this point is indicated by MAX in Fig. 16).

It may readily be understood that the strategy case Q+1 is expressed as follows:

| do u = 100 | when | $x_1 = 3.5,$ | $x_2 = 47$ |
|---|---|---|---|
| | until | $x_1 = 1.0,$ | $x_2 = 34$ |
| | min | $x_1 = 1.0,$ | $x_2 = 34$ |
| | max | $x_1 = 3.5,$ | $x_2 = 48$ |

In the example of the crane control described above, the graph of the action samples in the input space is as shown in Fig. 17. For the sake of simplicity, Fig. 17 illustrates a two-dimensional input-variable space in which the orthogonal axes are position x and sway angle θ. (This should of course be written more precisely as three-dimensional input-variable space in which the orthogonal axes are x, θ and dθ.)

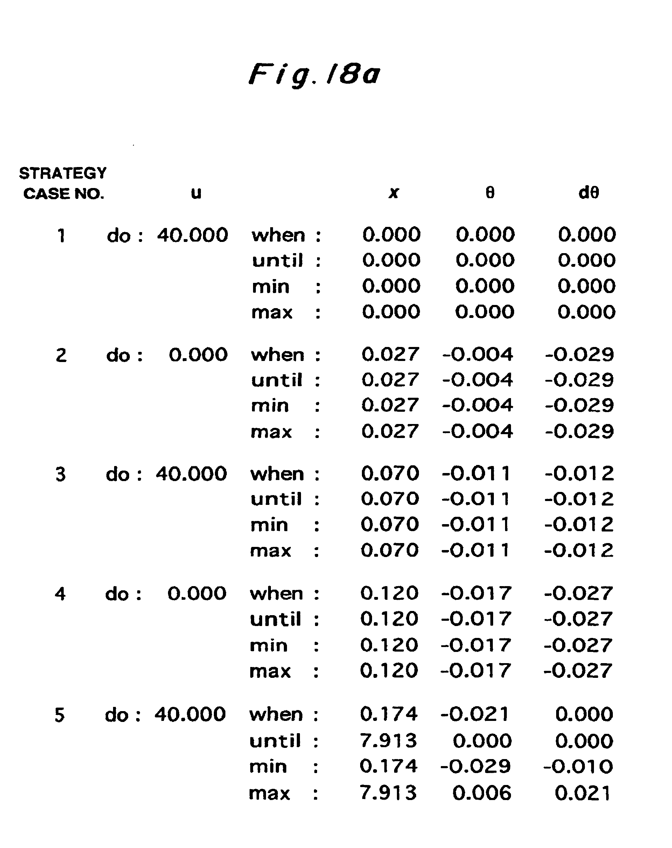

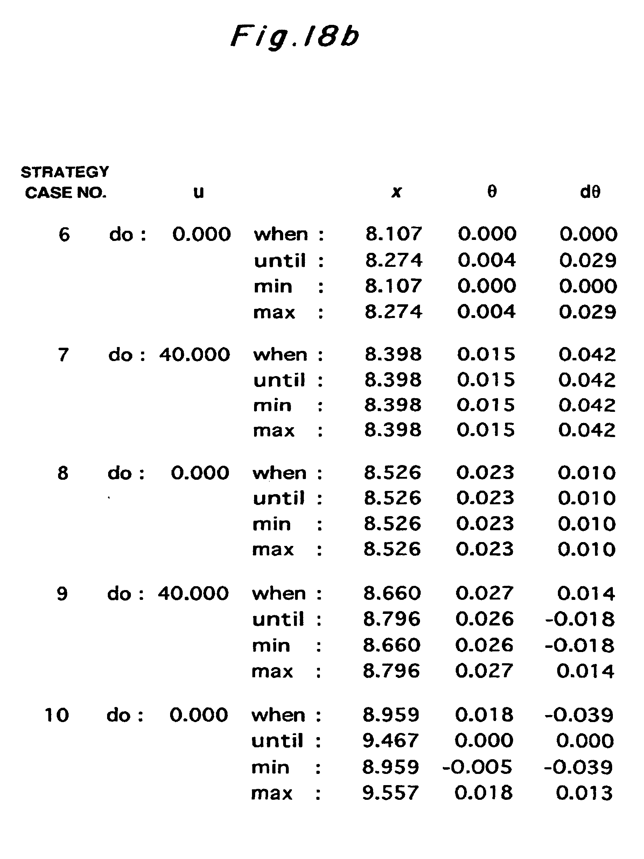

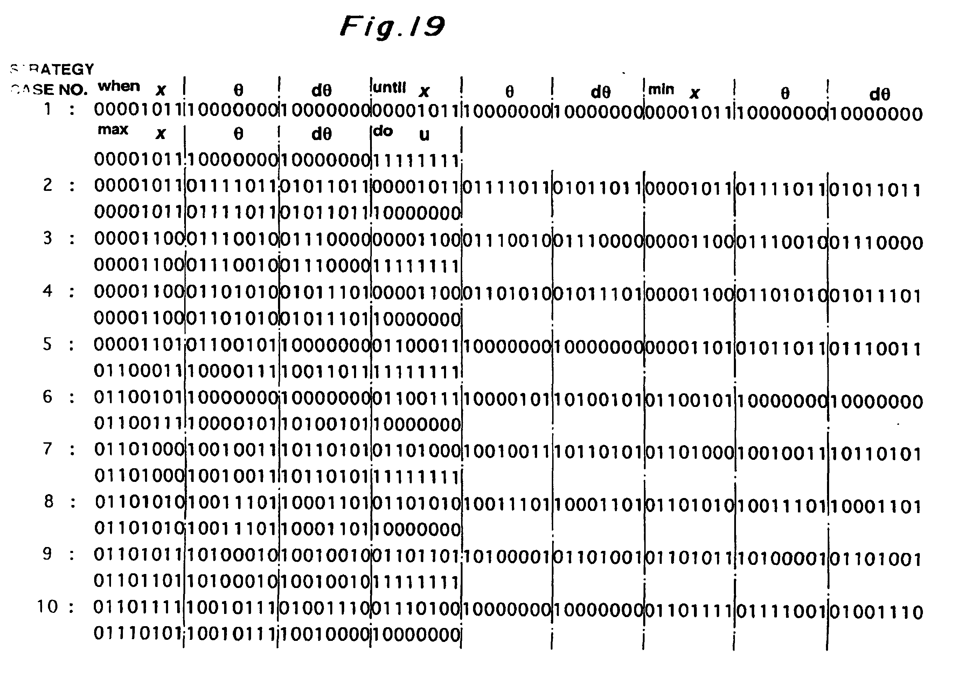

Strategy cases obtained by referring to the strategy samples shown in Fig. 13 are illustrated in Figs. 18a, 18b and 19. The strategy cases in Figs. 18a, 18b are represented using numerical values expressed as decimal numbers (see Fig. 9), and the strategy cases in Fig. 19 are obtained by converting these numerical values to binary strings (see Fig. 10).

In Figs. 18a, 18b, "do:" is followed by the output variable value. Further, the input variable values (the input variable values of the "when" item) are arrayed following "when:" in the order of the input variables x, θ, dθ. Similarly, "until:", "min:" and "max:" are each followed by the input variable values (the input variable values of the "until" item, "min" item and "max" item) in the order x, θ, dθ.

In Fig. 19, the binary codes are represented by eight bits for each variable value. The sequence is as follows: the input variable values of x, θ, dθ in the "when" item, the input variable values of x, θ, dθ in the "until" item, the input variable values of x, θ, dθ in the "min" item, the input variable values of x, θ, dθ in the "max" item and finally the output variable value of u in the "do" item.

In Fig. 17, the strategy cases 1, 2, 3, 4, 7 and 8 are not rectangles (hyperboxes) but are represented by single points (these points can also be considered as being covered by the concept of the hyperbox).

Step 107

The strategy cases are optimized by neglecting (deleting) unnecessary strategy cases in the total of strategy cases obtained by the above-described processing.

First, it is determined whether two or more strategy cases have the same output variable value. In a case where two or more strategy cases having the same output variable value have been found, the nearness of these cases is calculated based upon the input variable values (the hyperboxes). In a case where the cases are near to each other, one is left and the others are discarded or, alternatively, the strategy cases are combined.

For example, in a case where the hyperboxes relating to two or more strategy cases overlap perfectly, all but one are discarded.

Furthermore, in a case where the distance between two or more hyperboxes is calculated and the distance obtained is less than a predetermined threshold value, the strategy cases are combined (or merged) or one or more is discarded. For example, with regard to a point in the input variable space represented by the input variable values written following the "when" (or "until") item (or with regard to a MIN point or MAX point), the distance between these points in the two cases is used as the above-mentioned distance.

There are many approaches available as methods of making the number of strategy cases as small as possible.

In the example of the crane control system, cases in which the values of the output variable u are equal are numerous. However, since the points represented by the input variable values of these cases are fairly distant, all of the strategy cases are construed as being necessary and are left.

Step 108

The goal cases and strategy cases thus created are associated in the following manner:

Sub-step 108-1

With regard to the first strategy case (see Fig. 18a or Fig. 19), the status quantities of the case are compared with the goal condition of each goal case. The status quantities mentioned here are the input variable values following the "when" item (or the input variable values following the "until" item).

Sub-step 108-2

In a case where a status quantity does not satisfy the goal condition, the first strategy case is associated with this goal case. If a status quantity does satisfy the goal condition, no association is made. The reason for this is that when a goal condition has been satisfied, a strategy leading to the goal is no longer necessary.

Sub-step 108-3

The processing of sub-steps 108-1 and 108-2 is repeated for all strategy cases.

This linking together of goal cases and strategy cases will now be performed in concrete form in the example of the crane control system taking an input variable value of the "when" item as the status quantity.

Refer to the goal cases shown in Fig. 12 and the strategy cases depicted in Figs. 18a, 18b.

In Strategy Case No. 1, the value of the input variable x written following the "when" item is 0.000. This value does not satisfy the goal condition (value of "terminal state" = 9.467) of Goal No. 1. Accordingly, Strategy Case No. 1 is associated with Goal Case No. 1.

The value of the input variable $\theta$ written following the "when" item of Strategy Case No. 1 is 0.000. This value satisfies the goal condition [range of "transitional state" = (-0.029, 0.027)] of Goal Case No. 2. Accordingly, Strategy Case No. 1 is not associated with Goal Case No. 2.

Similarly, the value of the input variable d$\theta$ written following the "when" item of Strategy Case No. 1 is 0.000. This value satisfies the goal condition [range of "transitional state" = (-0.039, 0.042)] of Goal Case No. 3. Accordingly, Strategy Case No. 1 is not associated with Goal Case No. 3.

In the end, Strategy Case No. 1 is linked only to Goal Case No. 1.

The following results are obtained in a similar manner when the sub-steps 108-1, 108-2 are applied to the Strategy Cases Nos. 2 ~ 10:

Strategy Case Nos. 2, 3, 4, 5, 6, 8, 9 and 10 are linked only to Goal Case No. 1; and
Strategy Case No. 7 is linked to Goal Case Nos. 1 and 7.

Conversely, the following results are obtained from the viewpoint of the goal cases:

Goal Case No. 1 is linked to Strategy Case Nos. 1, 2, 3, 4, 5, 6, 7, 8, 9 and 10;
Goal Case No. 2 is not linked to any strategy case; and
Goal Case No. 3 is linked only to Strategy Case No. 7.

In order to store these associations in memory, each strategy case has pointers pointing to all goal cases that are associated with it. (These pointers are stored to correspond to the data representing each strategy case.) Further, each goal case has pointers pointing to all strategy cases associated with it.

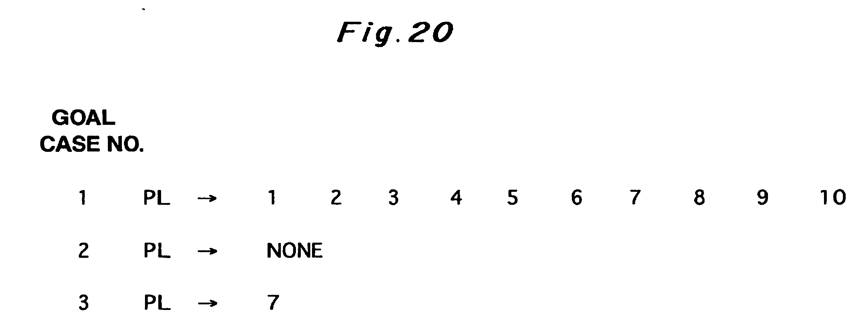

Fig. 20 illustrates the pointers provided for the goal cases. Here PL represents a pointer to a strategy case or cases, and the numbers indicated by the arrow following PL are the numbers of the strategy cases linked to the particular goal case.

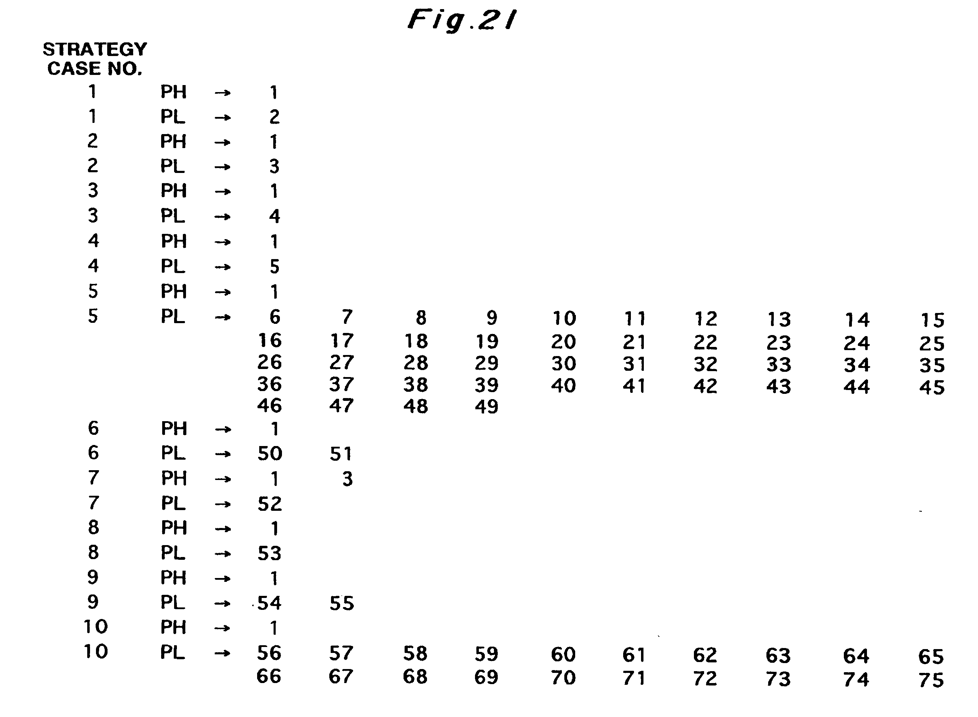

Fig. 21 illustrates the pointers provided in correspondence with the strategy cases. A pointer PH is a pointer to a goal case or cases, and a pointer PL is a pointer to an action case or cases (described next). A number indicated by the arrow following PH is the number of the goal case linked to the particular strategy case. A number indicated by the arrow following PL is the number of the action case linked to the particular strategy case.

Such linking of strategy cases and goal cases is displayed or printed as necessary. If required, the user can add new strategy cases, delete unnecessary strategy cases or modify existing strategy cases.

Step 109

Strategy cases and action cases are linked in the manner set forth below. The term "action case" signifies a set of input variable values and output variable values at each point in time and has substantially the same definition as "action sample". However, action samples having exactly the same values are excluded from the action cases.

Sub-step 109-1

With regard to the first action case (see Fig. 9 or 10), the status quantity of this action case is compared with the strategy condition of each strategy case. Here the term "status quantity" signifies the set of input variable values in the action case. The term "strategy condition" signifies a range from the set of input variable values written following the "when" item in a strategy case to the set of input variable values written following the item "until" in the strategy case. (This range will be referred to as the "when $\sim$ until range" below.)

Sub-step 109-2

In a case where a status quantity satisfies a strategy condition, the first action case is linked to this strategy case.

Sub-step 109-3

The processing of sub-steps 109-1 and 109-2 is repeated for all action cases.

Such linking will now be attempted in regard to the crane control system described above, with reference being had to Figs. 9, 18a and 18b. The action samples shown in Fig. 9 are action cases. However, since the first action case represents the quiescent state of the trolley, this case is meaningless in terms of model building and problem solving and no particular linkage is necessary. Accordingly, linking is performed starting from the second action case.

In the second action case (No. 2), the status quantity is x = 0.000, θ = 0.000, dθ = 0.000. This falls within the "when - until range" (x = 0.000 $\sim$ 0.000, θ = 0.000 - 0.000, dθ = 0.000 - 0.000) of Strategy Case No. 1. The status quantity of Action Case No. 2 does not fall within the "when - until range" of the other strategy cases. Accordingly, Action Case No. 2 is linked only to Strategy Case No. 1.

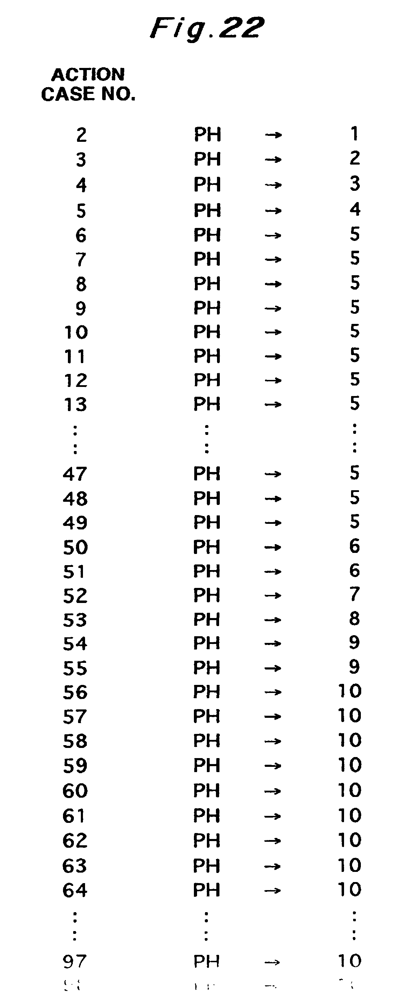

When this linking processing (sub-steps 109-1, 109-2) is performed in similar fashion with regard to the other action cases, the associations shown in Fig. 22 are obtained.

As shown in Fig. 22, for every action case number a strategy case linked to this action case is indicated by the pointer PH. The pointer PH points from the action case to the associated strategy case. The associated strategy case number is written immediately following the arrow of the pointer PH.

Each strategy case also is provided with a pointer to the action case or cases linked to it. This is indicated by PL in Fig. 21. The number or numbers indicated by the arrow of the pointer PL provided for each strategy case are the number or numbers of the action case or cases associated with this strategy case.

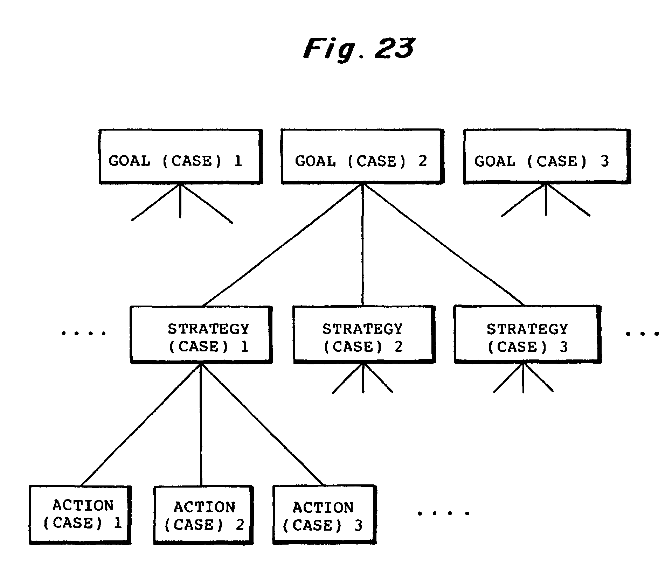

It will be appreciated that a model composed of goal cases, strategy cases and action cases has a hierarchy structure, as shown in Fig. 23, and that the goal cases, strategy cases and action cases are mutually associated. The goals (goal cases) occupy the highest level of the hierarchy (a conceptual decision level), the strategies (strategy cases) the intermediate level (a situational decision level) and the actions (action cases) occupy the lowermost level (an experience decision level).

Step 110

The model thus built is subjected to verification if necessary.

In order to perform verification, the above-mentioned action samples (teaching data; see Fig. 9 or 10) are used. By using the input data of the action samples, output is calculated in accordance with the previously constructed model just as in the procedure employed in a problem-solving mode, described later. (However, acceptance of input variable values and encoding at a step 121 are not necessarily required.) The output data obtained is compared with the output data in the action sample. If both items of data are equal values or nearly equal values (e.g., if the difference between the two items of data is less than a predetermined threshold), then the model is construed as being one created correctly.

If necessary, input data may be generated randomly and the input data may be applied to the system. The system calculates output data in accordance with the model and delivers this output data. Whether or not the output data is appropriate is judged by the user.

Step 111

Finally, the data representing the model constructed is saved by being transferred from the work area of the memory to a file area.

(4) Processing in the problem-solving mode

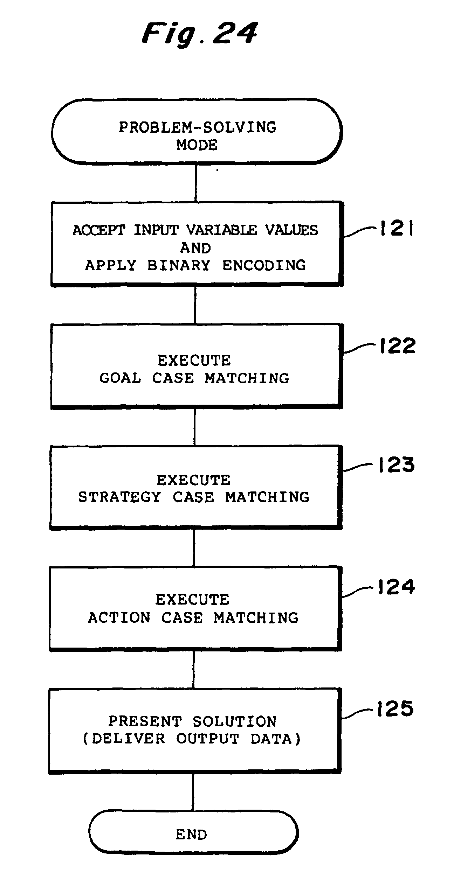

In the problem-solving mode, the system actually controls (runs or manipulates) the controlled object using the above-described model (see Fig. 2). The processing procedure is illustrated in Fig. 24.

Step 121

Input variable values from the sensors 11, 12, 1k (Fig. 2) or from rotational transducers representing the position x and angle sensors representing the angle of sway (Figs. 4 and 5) are accepted by the system 1. These input values are converted to binary data at a suitable resolution.

Step 122

The input data obtained is compared with the goal conditions of the goal cases contained in the model. If there are goal cases for which the goal conditions are not satisfied by the input data, then the strategy cases associated with these goal cases are listed.

In this step the system performs decision making at the conceptual level by deciding appropriate goal cases. Appropriate strategy cases are decided as a result.

Step 123

The input data is compared with the strategy cases selected at step 122. If there is a strategy case having a strategy condition (the "when - until range") which matches the input data, then the action cases associated with this strategy case are listed.

At this stage the system is attempting to perform situational decision making by deciding appropriate strategy cases. As a result, appropriate action cases are decided.

Step 124

From among the action cases selected at step 123, that having input variable values that match perfectly with the input data or that having input variable values closest to the input data (i.e., that having the shortest distance in the input variable space) is selected as a candidate.

Step 125

In general, one candidate is selected at step 124 and therefore the output variable value of the action case which is the candidate is delivered as the output data. In a case where two or more candidates exist, the best one is selected and the output variable value of this action case is delivered as the output data. For example, when the hyperboxes of two strategy cases partially overlap and input data is contained in the overlapping space, different output variable values are deduced from the two strategy cases. In this case, the output variable value selected is that obtained from the hyperbox for which the distance between the input data and the hyperbox vertex (the MIN or MAX point) is the shorter, by way of example. Alternatively, the output value initially obtained in processing is selected unconditionally.

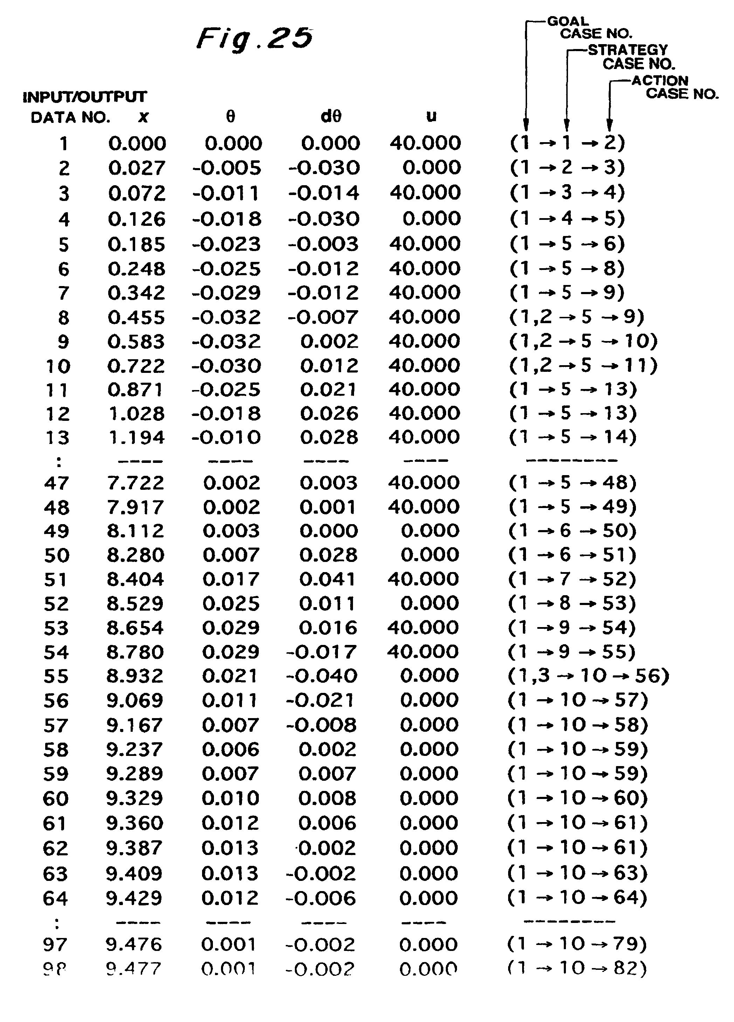

Fig. 25 illustrates input data obtained when the crane control system is automatically operated in accordance with the model, output data (used in crane control) computed in accordance with the model and the numbers of the cases selected in the course of obtaining the output values. The three numerals (connected by the arrows) within the parentheses on the rightmost side indicate the goal case number, the strategy case number and the action case number, respectively, from left to right.

For example, the input data of Input/Output Data No. 1 is $x = 0.000$, $\theta = 0.000$, $d\theta = 0.000$. These items of input data do not satisfy the goal condition of Goal Case No. 1 but they do satisfy the goal conditions of the other goal cases 2, 3 (see Fig. 12). Accordingly, the ten strategy cases 1, 2, 3, 4, 5, 6, 7, 8, 9 and 10 associated with goal case 1 are selected (see Fig. 20). (This is step 122.)

Among these strategy cases 1 $\sim$ 10, that having a strategy condition which satisfies the above-mentioned input data is solely Strategy Case No. 1 (see Fig. 18a). Accordingly, Action Case No. 2 linked to Strategy Case No. 1 is selected (see Fig. 21). (This is step 123.)

Accordingly, the output variable value $u = 40.00$ of Action Case No. 2 is delivered as the output data (see Fig. 9). (This corresponds to steps 124, 125).

Not only does the input data x at the Input/Output Data Nos. 8 $\sim$ 10 in Fig. 25 not satisfy the condition of Goal Case No. 1 but neither does the input data $\theta$ satisfy the goal condition of Goal Case No. 2. Accordingly, Goal Cases Nos. 1 and 2 are selected. However, a strategy case associated with Goal Case No. 2 does not exist. From the strategy cases 1 $\sim$ 10 associated with Goal Case No. 1, therefore, a strategy case which is matched by the input data is selected. Strategy cases which have strategy conditions that satisfy all of the input data x, $\theta$, $d\theta$ of the Input/Output Data Nos. 8 $\sim$ 10 do not exist. In a case such as this, the strategy case selected is that nearest to the input data (e.g., a strategy case for which the input data regarding some of the input variables satisfies the strategy condition, or a strategy case having a hyperbox at a distance closest to the input data). Strategy Case No. 5 is selected.

Among the action cases associated with Strategy Case No. 6 (see Fig. 21), action cases 9, 10, 11 having input variable values closest to the input data of each of the Input/Output Data Nos. 8, 9, 10, respectively, are selected, and the output variable value ($u = 40,000$) of these action cases is delivered as the output data.

The processing of steps 121 $\sim$ 125 in Fig. 24 is repeated whenever input data is accepted from the controlled object (i.e., at fixed time intervals.)

**Claims**

1. A method of building a model having a hierarchy structure constructed from mutually associated goal cases, strategy cases and action cases, of an object for controlling the object using the model, said method comprising the steps of:

   (a) accepting a series of action samples each comprising a set of input and output variable values obtained by operating or controlling an object (10);
   (b) creating, for each input variable, a goal case stipulated using an initial value, a terminal value, a maximum value and a minimum value of the input variable value in the accepted action samples;
   (c) extracting zones of input variables in which the output variable value in the accepted action samples remains fixed, and creating a strategy case, with regard to each zone, which links the zone of input variables to the output variable value;
   (d) associating a strategy case, which possesses a zone of input variables that does not satisfy a condition of a goal case, with said goal case; and
   (e) associating an action case, which possesses input variable values that fall within the zone of input variables in a strategy case, with said strategy case.

2. The method according to claim 1, further comprising a step of converting the accepted action samples to binary data of prescribed bits.

3. The method according to claim 1, wherein said step (b) includes the steps of:

> creating a provisional goal case;
> outputting the provisional goal case created; and
> adopting a goal case, after it has been evaluated by a user, as a final goal case.

4. The method according to claim 3, wherein the evalua tion performed by the user includes adding, deleting or modifying goal cases.

5. The method according to claim 1, wherein said step (c) includes the steps of:

> (c-1) creating strategy samples by successively comparing neighbouring output variable values arrayed in a time sequence, and storing, when a change has occurred, the output variable values immediately before and immediately after the change;
> (c-2) converting said strategy samples to strategy cases, which possess a "do ... when ... until ... min ... max" format, by referring to said action samples; and
> (c-3) optimizing said strategy cases after conversion.

6. The method according to claim 5, wherein said step (c-3) comprises reducing the number of two or more strategy cases having identical output variable values.

7. The method according to claim 1, wherein linking of strategy cases and goal cases is implemented by pointers to the goal cases provided for each of the strategy cases and pointers to the strategy cases provided for each of the goal cases.

8. The method according to claim 1, wherein linking of action cases and strategy cases is implemented by pointers to the strategy cases provided for each of the action cases and pointers to the action cases provided for each of the strategy cases.

9. The method according to claim 1, wherein an action case is created by leaving one and deleting the others of action samples comprising sets of all identical input and output variable values.

10. The method according to claim 1, further comprising the steps of:

> (f) accepting said series of action samples one at a time in the time sequence thereof using said action samples as data for verifying said model;
> (g) finding goal cases having conditions not satisfied by the input variable values of an accepted action sample and listing strategy cases associated with the goal cases found;
> (h) finding, from among the strategy cases listed, a strategy case having a condition satisfied by the accepted input variable values and listing action cases associated with the strategy case found; and
> (i) from among the action cases listed, outputting an output variable value of an action case having input variable values that agree with or are nearest to the accepted input variable values;
>
> whereby said model is verified.

11. A system for building a model having a hierarchy structure constructed from mutually associated goal cases, strategy cases and action cases, of an object for controlling the object using the model, the system comprising:

> (a) means (30, 32) for accepting and storing a series of action samples each comprising a set of input and output variable values obtained by operating or controlling an object (10);
> (b) means (30) for creating, for each input variable, a goal case stipulated using an initial value, a terminal value, a maximum value and a minimum value of the input variable value in the accepted action samples;
> (c) means (30) for extracting zones of input variables in which the output variable value in the accepted action samples remains fixed, and creating a strategy case, with regard to each zone, which links the zone of input variables to the output variable value;
> (d) means (30) for associating a strategy case, which possesses a zone of input variables that does not satisfy a condition of the goal case, with the goal case; and
> (e) means (30) for associating an action case, which possesses input variable values that fall within the zone

EP 0 749 057 B1

of input variables in a strategy case, with said strategy case.

12. The system according to claim 11, wherein said means (a) includes means (30) for converting the accepted action samples to binary data of prescribed bits.

13. The system according to claim 11, wherein said means (b) includes:

means (30) for creating a provisional goal case;
means (34, 35) for outputting the provisional goal case created; and
means (32) for adopting and storing a goal case, after it has been evaluated by a user, as a final goal case.

14. The system according to claim 13, wherein the evaluation performed by the user includes adding, deleting or modifying goal cases.

15. The system according to claim 11, wherein said means (c) includes:

(c-1) means (30) for creating strategy samples by successively comparing neighbouring output variable values arrayed in a time sequence, and storing, when a change has occurred, the output variable values immediately before and immediately after the change;
(c-2) means (30) for converting said strategy samples to strategy cases, which possess a "do ... when ... until ... min ... max" format, by referring to said action samples; and
(c-3) means (30) for optimizing said strategy cases after conversion.

16. The system according to claim 15, wherein said means (c-3) comprises reducing the number of two or more strategy cases having identical output variable values.

17. The system according to claim 11, wherein said means (d) implements linking of strategy cases and goal cases by pointers to the goal cases provided for each of the strategy cases and pointers to the strategy cases provided for each of the goal cases.

18. The system according to claim 11, wherein said means (e) implements linking of action cases and strategy cases by pointers to the strategy cases provided for each of the action cases and pointers to the action cases provided for each of the strategy cases.

19. The system according to claim 11, wherein an action case is created by leaving one and deleting the others of action samples comprising sets of all identical input and output variable values.

20. The system according to claim 11, further comprising:

(f) means (30) for accepting said series of action samples one at a time in the time sequence thereof in order to use said action samples as data for verification purposes;
(g) means (30) for finding goal cases having conditions not satisfied by the input variable values of an accepted action sample and listing strategy cases associated with the goal cases found;
(h) means (30) for finding, from among the strategy cases listed, a strategy case having a condition satisfied by the accepted input variable values and listing action cases associated with the strategy case found; and
(i) means (34, 35) for outputting, from among the action cases listed, an output variable value of an action case having input variable values that agree with or are nearest to the accepted input variable values;

whereby said model is verified.

**Patentansprüche**

1. Verfahren zur Errichtung eines aus wechselseitig zugeordneten Zielfällen, Strategiefällen und Aktionsfällen aufgebauten, hierarchisch strukturierten Modells eines Objekts zur Steuerung des Objekts unter Verwendung des Modells, wobei das Verfahren folgende Schritte aufweist:

(a) Entgegennehmen einer Folge von Aktionsproben, von denen jede einen Satz von Eingangs- und Ausgangsvariablenwerten aufweist, die durch Betreiben oder Steuern eines Objekts (10) gewonnen sind;

(b) Erzeugen, für jede Eingangsvariable, eines Zielfalles, der unter Verwendung eines Anfangswerts, eines Endwerts, eines Maximalwerts und eines Minimalwerts des Eingangsvariablenwerts festgelegt ist, in den entgegengenommenen Aktionsproben;

(c) Herausziehen von Zonen von Eingangsvariablen, bei welchen der Ausgangsvariablenwert in den entgegengenommenen Aktionsproben fest bleibt, und Erzeugen eines Strategiefalles in Bezug auf jede Zone, welcher die Zone von Eingangsvariablen mit dem Ausgangsvariablenwert verknüpft;

(d) Zuordnen eines Strategiefalles, welcher eine Zone von Eingangsvariablen besitzt, die eine Bedingung eines Zielfalles nicht erfüllt, zu dem Zielfall;

(e) Zuordnen eines Aktionsfalles, welcher Eingangsvariablenwerte besitzt, die in die Zone von Eingangsvariablen in einem Strategiefall fallen, zu dem Strategiefall.

2. Verfahren nach Anspruch 1, welches ferner einen Schnitt der Umwandlung der entgegengenommenen Aktionsproben in Binärdaten vorgeschriebener Bits aufweist.

3. Verfahren nach Anspruch 1, wobei der Schritt (b) folgende Schritte enthält:

Erzeugen eines provisorischen Zielfalles;
Ausgeben des erzeugten provisorischen Zielfalles; und
Übernehmen eines Zielfalles, nachdem er durch einen Benutzer ausgewertet worden ist, als einen abschließenden Zielfall.

4. Verfahren nach Anspruch 3, wobei die vom Benutzer durchgeführte Auswertung ein Hinzufügen, Streichen oder Modifizieren von Zielfällen enthält.

5. Verfahren nach Anspruch 1, wobei der Schritt (c) folgende Schritte enthält:

(c-1) Erzeugen von Strategieproben durch aufeinanderfolgendes Vergleichen von benachbarten Ausgangsvariablenwerten, die in einer zeitlichen Folge angeordnet sind, und Speichern, wenn eine Änderung aufgetreten ist, der Ausgangsvariablenwerte unmittelbar vor und unmittelbar nach der Änderung;

(c-2) Umwandeln der Strategieproben in Strategiefälle, welche ein "tu ... wenn ... bis ... min ... max" Format besitzen, durch Bezugnahme auf die Aktionsmuster; und

(c-3) Optimieren der Strategiefälle nach Umwandlung.

6. Verfahren nach Anspruch 5, wobei der Schritt (c-3) das Reduzieren der Anzahl von zwei oder mehr Strategiefällen, die identische Ausgangsvariablenwerte haben, umfasst.

7. Verfahren nach Anspruch 1, wobei das Verknüpfen von Strategiefällen und Zielfällen durch Zeiger auf die Zielfälle, die für jeden der Strategiefälle vorgesehen sind, und Zeiger auf die Strategiefälle, die für jeden der Zielfälle vorgesehen sind, durchgeführt wird.

8. Verfahren nach Anspruch 1, wobei das Verknüpfen von Aktionsfällen und Strategiefällen durch Zeiger auf die Strategiefälle, die für jeden der Aktionsfälle vorgesehen sind, und Zeiger auf die Aktionsfälle, die für jeden der Strategiefälle vorgesehen sind, durchgeführt wird.

9. Verfahren nach Anspruch 1, wobei ein Aktionsfall erzeugt wird, indem von Aktionsproben, die Sätze von allen identischen Eingangs- und Ausgangsvariablenwerten umfassen, eine übrig gelassen und die anderen gestrichen werden.

10. Verfahren nach Anspruch 1, welches ferner folgende Schritte aufweist:

(f) Entgegennehmen der Folge von Aktionsproben einzeln in ihrer zeitlichen Abfolge unter Verwendung der Aktionsproben als Daten zur Verifizierung des Modells;

(g) Auffinden von Zielfällen mit Bedingungen, die durch die Eingangsvariablenwerte einer entgegengenommenen Aktionsprobe nicht erfüllt sind, und Auflisten von Strategiefällen, die den aufgefundenen Zielfällen zugeordnet sind;

(h) Auffinden, unter den aufgelisteten Strategiefällen, eines Strategiefalles mit einer Bedingung, die durch die entgegengenommenen Eingangsvariablenwerte erfüllt ist, und Auflisten von Aktionsfällen, die dem aufgefundenen Strategiefall zugeordnet sind; und

(i) Ausgeben, aus den aufgelisteten Aktionsfällen, eines Ausgangsvariablenwerts eines Aktionsfalles mit Eingangsvariablenwerten, die mit dem entgegengenommenen Eingangsvariablenwerten übereinstimmen oder diesen am nächsten sind;

wodurch das Modell verifiziert wird.

11. System zur Errichtung eines aus wechselseitig zugeordneten Zielfällen, Strategiefällen und Aktionsfällen aufgebauten, hierarchisch strukturierten Modells eines Objekts zur Steuerung des Objekts unter Verwendung des Modells, wobei das System aufweist:

(a) Mittel (30, 32) für die Entgegennahme und Speicherung einer Folge von Aktionsproben, die jeweils einen Satz von Werten von Eingangs- und Ausgangsvariablenwerten aufweisen, die durch Betreiben oder Steuern eines Objekts (10) gewonnen sind;

(b) Mittel (30) zur Erzeugung, für jede Eingangsvariable eines Zielfalles, welcher unter Verwendung eines Anfangswerts, eines Endwerts, eines Maximalwerts und eines Minimalwerts des Eingangsvariablenwerts festgelegt ist, in den entgegengenommenen Aktionsproben;

(c) Mittel (30) für das Herausziehen von Zonen von Eingangsvariablen, bei welchen der Ausgangsvariablenwert in den entgegengenommenen Aktionsproben fest bleibt, und zur Erzeugung eines Strategiefalles in Bezug auf jede Zone, welcher die Zone von Eingangsvariablen mit dem Ausgangsvariablenwert verknüpft;

(d) Mittel (30) zur Zuordnung eines Strategiefalles, welcher eine Zone von Eingangsvariablen besitzt, die eine Bedingung des Zielfalles nicht erfüllt, zu dem Zielfall; und

(e) Mittel (30) zur Zuordnung eines Aktionsfalles, welcher Eingangsvariablenwerte besitzt, die in die Zone von Eingangsvariablen in einem Strategiefall fallen, zu dem Strategiefall.

12. System nach Anspruch 11, wobei die Mittel (a) Mittel (30) zur Umwandlung der entgegengenommenen Aktionsproben in Binärdaten vorgeschriebener Bits enthalten.

13. System nach Anspruch 11, wobei die Mittel (b) enthalten:

Mittel (30) zur Erzeugung eines provisorischen Zielfalles;
Mittel (34, 35) zur Ausgabe des erzeugten provisorischen Zielfalles; und
Mittel (32) zum Übernehmen und Speichern eines Zielfalles, nachdem er durch einen Benutzer ausgewertet worden ist, als abschließenden Zielfall.

14. System nach Anspruch 13, wobei die durch den Benutzer durchgeführte Auswertung ein Hinzufügen, Streichen oder Modifizieren von Zielfällen enthält.

15. System nach Anspruch 11, wobei die Mittel (c) enthalten:

(c-1) Mittel (30) zur Erzeugung von Strategieproben durch aufeinanderfolgendes Vergleichen von benachbarten Ausgangsvariablenwerten, die in einer zeitlichen Folge angeordnet sind, und zur Speicherung, wenn eine Änderung aufgetreten ist, der Ausgangsvariablenwerte unmittelbar vor und unmittelbar nach der Änderung;
(c-2) Mittel (30) zur Umwandlung der Strategieproben in Strategiefälle, welche ein "tu ... wenn ... bis ... min ... max" Format besitzen, durch Bezugnahme auf die Aktionsproben; und
(c-3) Mittel (30) zur Optimierung der Strategiefälle nach Umwandlung.

16. System nach Anspruch 15, wobei die Mittel (c-3) das Reduzieren der Anzahl von zwei oder mehr Strategiefällen mit identischen Ausgangsvariablenwerten umfassen.

17. System nach Anspruch 11, wobei die Mittel (d) das Verknüpfen von Strategiefällen und Zielfällen durch Zeiger auf die Zielfälle, die für jeden der Strategiefälle vorgesehen sind, und Zeiger auf die Strategiefälle, die für jeden der Zielfälle vorgesehen sind, verwirklichen.

18. System nach Anspruch 11, wobei die Mittel (e) das Verknüpfen von Aktionsfällen und Strategiefällen durch Zeiger auf die Strategiefälle, die für jeden der Aktionsfälle vorgesehen sind, und Zeiger auf die Aktionsfälle, die für jeden der Strategiefälle vorgesehen sind, verwirklichen.

**EP 0 749 057 B1**

**19.** System nach Anspruch 11, wobei ein Aktionsfall durch Übriglassen einer der Aktionsproben, die Sätze aller identischen Eingangs- und Ausgangsvariablenwerte umfassen, und Streichen der anderen erzeugt wird.

**20.** System nach Anspruch 11, welches ferner aufweist:

(f) Mittel (30) zur Entgegennahme der Folge von Aktionsproben einzeln in ihrer zeitlichen Abfolge zur Verwendung der Aktionsproben als Daten zu Verifikationszwecken;
(g) Mittel (30) zum Auffinden von Zielfällen mit Bedingungen, die durch die Eingangsvariablenwerte einer entgegengenommenen Aktionsprobe nicht erfüllt werden, und Auflisten von den aufgefundenen Zielfällen zugeordneten Strategiefällen;
(h) Mittel (30) zum Auffinden, unter den aufgelisteten Strategiefällen, eines Strategiefalles mit einer Bedingung, die durch die entgegengenommenen Eingangsvariablenwerte erfüllt wird, und Auflisten von Aktionsfällen, die dem aufgefundenen Strategiefall zugeordnet sind; und
(i) Mittel (34, 35) zur Ausgabe unter den aufgelisteten Aktionsfällen, eines Ausgangsvariablenwerts eines Aktionsfalles mit Eingangsvariablenwerten, die mit den entgegengenommenen Eingangsvariablenwerten übereinstimmen oder zu ihnen am nächsten liegen;

wodurch das Modell verifiziert ist.

## Revendications

**1.** Procédé de réalisation d'un modèle ayant une structure hiérarchique construit à partir de cas de buts, de cas de stratégie et de cas d'action mutuellement associés, d'un objet pour commander l'objet utilisant le modèle, ledit procédé comprenant les étapes consistant à :

(a) accepter une série d'échantillons d'actions comprenant chacun un ensemble de valeurs variables d'entrées et de sorties obtenues en actionnant ou en commandant un objet (10) ;
(b) créer, pour chacune des variables d'entrée, un cas de but stipulé en utilisant une valeur initiale, une valeur finale, une valeur minimum et une valeur maximum de la valeur variable d'entrée dans les échantillons d'actions acceptés ;
(c) extraire des zones de variables d'entrée dans lesquelles la valeur variable de sortie dans les échantillons d'actions acceptés reste stable, et créer un cas de stratégie, par rapport à chaque zone, qui relie la zone de variables d'entrée à la valeur variable de sortie ;
(d) associer un cas de stratégie, qui possède une zone de variables d'entrée qui ne remplit pas une condition d'un cas de but, audit cas de but ; et
(e) associer un cas d'action, qui possède des valeurs variables d'entrée qui sont comprises dans la zone de variables d'entrée dans un cas de stratégie, audit cas de stratégie.

**2.** Procédé selon la revendication 1, comprenant en outre l'étape consistant à convertir les échantillons d'actions acceptés en des données binaires de bits prescrits.

**3.** Procédé selon la revendication 1, dans lequel l'étape (b) comprend les étapes consistant à :

créer un cas de but provisoire ;
fournir en sortie le cas de but provisoire créé ; et
adopter un cas de but, après que celui-ci ait été évalué par un utilisateur, en tant que cas de but final.

**4.** Procédé selon la revendication 3, dans lequel l'évaluation effectuée par l'utilisateur comprend l'étape consistant à ajouter, effacer ou modifier des cas de but.

**5.** Procédé selon la revendication 1, dans lequel ladite étape (c) comprend les étapes consistant à :

(c-1) créer des échantillons de stratégie en comparant de manière successive des valeurs variables de sortie avoisinantes disposées dans des séquences de temps et stocker, lors de l'apparition d'un changement, les valeurs variables de sortie immédiatement avant et immédiatement après le changement ;
(c-2) convertir lesdits échantillons de stratégie en des cas de stratégie, qui possèdent un format «faire... quand...jusqu'à...min...max», en faisant référence auxdits échantillons d'actions ; et

(c-3) optimiser lesdits cas de stratégie après la conversion.

6. Procédé selon la revendication 5, dans lequel ladite étape (c-3) comprend l'étape consistant à réduire le nombre de deux cas de stratégie ou plus ayant des valeurs variables de sortie identiques.

7. Procédé selon la revendication 1, dans lequel la liaison des cas de stratégie et des cas de buta est implémentée par des pointeurs sur les cas de buts fournis pour chacun des cas de stratégie et des pointeurs sur les cas de stratégie fournis pour chacun des cas de buts.

8. Procédé selon la revendication 1, dans lequel la liaison des cas d'actions et des cas de stratégie est implémentée par des pointeurs sur les cas de stratégie fournis pour chacun des cas d'actions et par des pointeurs sur les cas d'actions fournis pour chacun des cas de stratégie.

9. Procédé selon la revendication 1, dans lequel un cas d'actions est créé en laissant un échantillon d'action et en effaçant les autres échantillons d'actions comprenant des ensembles de valeurs variables d'entrée et de sortie identiques.

10. Procédé selon la revendication 1, comprenant en outre les étapes consistant à :

(f) accepter ladite série d'échantillons d'actions, un par un dans la séquence de temps, en utilisant lesdits échantillons d'actions en tant que des données pour vérifier ledit modèle ;
(g) rechercher des cas de buts ayant des conditions non remplies par les valeurs variables d'entrée d'un échantillon d'actions accepté et mettre en liste les cas de stratégie associés aux cas de buts trouvés ;
(h) rechercher, parmi les cas de stratégie mis en liste, un cas de stratégie ayant une condition remplie par les valeurs variables d'entrée acceptées et mettre en liste les cas d'actions associés au cas de stratégie trouvé ; et
(i) parmi les cas d'actions mis en liste, fournir en sortie une valeur variable de sortie d'un cas d'action ayant des valeurs variables d'entrée qui sont en accord avec les valeurs variables d'entrées ou les approchent le plus ;

moyennant quoi ledit modèle est vérifié.

11. Système de réalisation d'un modèle ayant une structure hiérarchique, construit à partir de cas de buts, de cas de stratégie et de cas d'action mutuellement associés, d'un objet pour commander l'objet utilisant le modèle, le système comprenant :

(a) des moyens (30, 32) pour accepter et stocker une série d'échantillons d'actions comprenant chacun un ensemble de valeurs variables d'entrée et de sortie obtenues en actionnant ou en commandant un objet (10) ;
(b) des moyens (30) pour créer, pour chaque variable d'entrée, un cas de but stipulé en utilisant une valeur initiale, une valeur finale, une valeur minimum et une valeur maximum de la valeur variable d'entrée dans les échantillons d'actions acceptés ;
(c) des moyens (30) pour extraire des zones de variables d'entrée dans lesquelles la valeur variable de sortie dans les échantillons d'actions acceptés restent stables, et créer un cas de stratégie, en rapport à chaque zone, qui relie la zone de variables d'entrée à la valeur variable de sortie ;
(d) des moyens (30) pour associer un cas de stratégie, qui possède une zone de variables d'entrée qui ne remplit pas une condition du cas de but, au cas de but ; et
(e) des moyens (30) pour associer un cas d'action, qui possède des valeurs variables d'entrée qui sont comprises dans la zone de variables d'entrée dans un cas de stratégie, audit cas de stratégie.

12. Système selon la revendication 11, dans lequel lesdits moyens (a) comprennent des moyens (30) pour convertir les échantillons d'actions acceptés en des données binaires de bits prescrits.

13. Système selon la revendication 11, dans lequel lesdits moyens (b) comprennent :

des moyens (30) pour créer un cas de but provisoire ;
des moyens (34, 35) pour fournir en sortie le cas de but provisoire créé ; et
des moyens (32) pour adopter et stocker un cas de but, après que celui-ci ait été évalué par un utilisateur, en tant que cas de but final.

**14.** Système selon la revendication 13, dans lequel l'évaluation effectuée par l'utilisateur comprend l'étape consistant à ajouter, effacer ou modifier des cas de but.

**15.** Système selon la revendication 11, dans lequel lesdits moyens (c) comprennent :

(c-1) des moyens (30) pour créer des échantillons de stratégie en comparant de manière successive des valeurs variables de sortie avoisinantes disposées dans des séquences de temps et stocker, lors de l'apparition d'un changement, les valeurs variables de sortie immédiatement avant et immédiatement après le changement ;
(c-2) des moyens (30) pour convertir lesdits échantillons de stratégie en des cas de stratégie, qui possèdent un format «faire...quand...jusqu'à...min...max», en faisant référence auxdits échantillons d'actions ; et
(c-3) des moyens (30) pour optimiser lesdits cas de stratégie après la conversion.

**16.** Système selon la revendication 15, dans lequel lesdits moyens (c-3) comprennent des moyens pour réduire le nombre de deux cas de stratégie ou plus ayant des valeurs variables de sortie identiques.

**17.** Système selon la revendication 11, dans lequel lesdits moyens (d) implémentent la liaison des cas de stratégie et des cas de but par des pointeurs sur les cas de buts fournis pour chacun des cas de stratégie et par des pointeurs sur les cas de stratégie fournis pour chacun des cas de buts.

**18.** Système selon la revendication 11, dans lequel lesdits moyens (e) implémentent la liaison des cas d'actions et des cas de stratégie par des pointeurs sur les cas de stratégie fournis pour chacun des cas d'actions et des pointeurs sur les cas d'actions fournis pour chacun des cas de stratégie.

**19.** Système selon la revendication 11, dans lequel un cas d'action est créé en laissant un échantillon d'action et en effaçant les autres échantillons d'action comprenant des ensembles de valeurs variables d'entrée et de sortie identiques.

**20.** Système selon la revendication 11, comprenant en outre :

(f) des moyens (30) pour accepter ladite série d'échantillons d'actions, un par un dans la séquence de temps, afin d'utiliser lesdits échantillons d'actions en tant que des données dans un but de vérification;
(g) des moyens (30) pour rechercher des cas de buts ayant des conditions non remplies par les valeurs variables d'entrée d'un échantillon d'actions accepté et mettre en liste les cas de stratégie associés aux cas de buts trouvés ;
(h) des moyens (30) pour rechercher, parmi les cas de stratégie mis en liste, un cas de stratégie ayant une condition remplie par les valeurs variables d'entrée acceptées et mettre en liste les cas d'actions associés au cas de stratégie trouvé ; et
(i) des moyens (34, 35) pour fournir en sortie, parmi les cas d'actions mis en liste, une valeur variable de sortie d'un cas d'action ayant des valeurs variables d'entrée qui sont en accord avec les valeurs variables d'entrées ou qui les approchent le plus ;

moyennant quoi ledit modèle est vérifié.

*Fig. 1*

# *Fig.2*

## Fig. 3

INPUT UNIT — 33

DISPLAY UNIT — 34

I

A/D — 36

A/D — 36

A/D — 36

FROM SENSORS

A/D — 37

FROM OPERATING UNIT

38 — D/A

TO ACTUATOR

COMPUTER

30

PROGRAM MEMORY — 31

DATA MEMORY — 32

PRINTER — 35

EP 0 749 057 B1

# Fig.4

# Fig. 5

# Fig.6

# Fig. 7

# *Fig.8a*

```
┌─────────────────────────┐
│      MODELING MODE      │
└─────────────────────────┘
            │
┌─────────────────────────┐
│    MANUAL OPERATION     │──── 101
│     ACCEPT AND STORE    │
│     INPUT/OUTPUT DATA   │
└─────────────────────────┘
            │
┌─────────────────────────┐
│        PERFORM          │──── 102
│     BINARY ENCODING     │
└─────────────────────────┘
            │
┌─────────────────────────┐
│       ESTABLISH         │──── 103
│  INITIAL SETTING OF GOALS │
└─────────────────────────┘
            │
┌─────────────────────────┐
│     EVALUATE, BY USER,  │──── 104
│  INITIAL SETTING OF GOALS │
└─────────────────────────┘
            │
┌─────────────────────────┐
│    EXTRACT STRATEGIES   │──── 105
└─────────────────────────┘
            │
┌─────────────────────────┐
│        CONVERT          │──── 106
│    TO STRATEGY CASES    │
└─────────────────────────┘
            │
            ▼
```

# Fig.8b

A

OPTIMIZE
STRATEGY CASES — 107

LINK
GOALS AND STRATEGIES — 108

LINK
STRATEGIES AND ACTIONS — 109

VERIFY MODEL — 110

SAVE MODEL — 111

END

## Fig.9

| TIME t | INPUT x | INPUT θ | INPUT dθ | OUTPUT u | SAMPLE NO. (ACTION NO.) | |
|---|---|---|---|---|---|---|
| 0.00 | 0.000 | 0.000 | 0.000 | 0.000 | 1 | |
| 0.30 | 0.000 | 0.000 | 0.000 | 40.000 | 2 | |
| 0.60 | 0.027 | -0.004 | -0.029 | 0.000 | 3 | T1 |
| 0.90 | 0.070 | -0.011 | -0.012 | 40.000 | 4 | |
| 1.20 | 0.120 | -0.017 | -0.027 | 0.000 | 5 | |
| 1.50 | 0.174 | -0.021 | 0.000 | 40.000 | 6 | |
| 1.80 | 0.228 | -0.022 | -0.009 | 40.000 | 7 | |
| 2.10 | 0.313 | -0.025 | -0.010 | 40.000 | 8 | |
| 2.40 | 0.417 | -0.028 | -0.006 | 40.000 | 9 | |
| 2.70 | 0.535 | -0.029 | 0.001 | 40.000 | 10 | |
| 3.00 | 0.665 | -0.027 | 0.009 | 40.000 | 11 | T2 |
| 3.30 | 0.804 | -0.023 | 0.016 | 40.000 | 12 | |
| 3.60 | 0.954 | -0.018 | 0.020 | 40.000 | 13 | |
| ⋮ | ⋮ | ⋮ | ⋮ | ⋮ | ⋮ | |
| 13.80 | 7.525 | 0.000 | 0.000 | 40.000 | 47 | |
| 14.10 | 7.719 | 0.000 | 0.000 | 40.000 | 48 | |
| 14.40 | 7.913 | 0.000 | 0.000 | 40.000 | 49 | |
| 14.70 | 8.107 | 0.000 | 0.000 | 0.000 | 50 | |
| 15.00 | 8.274 | 0.004 | 0.029 | 0.000 | 51 | |
| 15.30 | 8.398 | 0.015 | 0.042 | 40.000 | 52 | |
| 15.60 | 8.526 | 0.023 | 0.010 | 0.000 | 53 | T3 |
| 15.90 | 8.660 | 0.027 | 0.014 | 40.000 | 54 | |
| 16.20 | 8.796 | 0.026 | -0.018 | 40.000 | 55 | |
| 16.50 | 8.959 | 0.018 | -0.039 | 0.000 | 56 | |
| 16.80 | 9.104 | 0.009 | -0.017 | 0.000 | 57 | |
| 17.10 | 9.206 | 0.006 | 0.000 | 0.000 | 58 | |
| 17.40 | 9.278 | 0.008 | 0.009 | 0.000 | 59 | |
| 17.70 | 9.330 | 0.011 | 0.013 | 0.000 | 60 | |
| 18.00 | 9.372 | 0.015 | 0.010 | 0.000 | 61 | |
| 18.30 | 9.408 | 0.017 | 0.005 | 0.000 | 62 | T4 |
| 18.60 | 9.441 | 0.018 | -0.002 | 0.000 | 63 | |
| 18.90 | 9.470 | 0.016 | -0.008 | 0.000 | 64 | |
| ⋮ | ⋮ | ⋮ | ⋮ | ⋮ | ⋮ | |
| 28.80 | 9.400 | 0.000 | 0.000 | 0.000 | 97 | |

## Fig. 10

| SAMPLE NO. (ACTION NO.) | INPUT x | INPUT θ | INPUT dθ | OUTPUT u | TIME t |
|---|---|---|---|---|---|
| 1 | : 00001011 | 10000000 | 10000000 | 10000000 | 0.00 |
| 2 | : 00001011 | 10000000 | 10000000 | 11111111 | 0.30 |
| 3 | : 00001011 | 01111011 | 01011011 | 10000000 | 0.60 |
| 4 | : 00001100 | 01110010 | 01110000 | 11111111 | 0.90 |
| 5 | : 00001100 | 01101010 | 01011101 | 10000000 | 1.20 |
| 6 | : 00001101 | 01100101 | 10000000 | 11111111 | 1.50 |
| 7 | : 00001101 | 01100100 | 01110100 | 11111111 | 1.80 |
| 8 | : 00001110 | 01100000 | 01110011 | 11111111 | 2.10 |
| 9 | : 00001111 | 01011100 | 01111000 | 11111111 | 2.40 |
| 10 | : 00010001 | 01011011 | 10000001 | 11111111 | 2.70 |
| 11 | : 00010010 | 01011101 | 10001011 | 11111111 | 3.00 |
| 12 | : 00010100 | 01100010 | 10010100 | 11111111 | 3.30 |
| 13 | : 00010101 | 01101001 | 10011001 | 11111111 | 3.60 |
| : | ---- | ---- | ---- | ---- | : |
| 47 | : 01011111 | 10000000 | 10000000 | 11111111 | 13.80 |
| 48 | : 01100001 | 10000000 | 10000000 | 11111111 | 14.10 |
| 49 | : 01100011 | 10000000 | 10000000 | 11111111 | 14.40 |
| 50 | : 01100101 | 10000000 | 10000000 | 10000000 | 14.70 |
| 51 | : 01100111 | 10000101 | 10100101 | 10000000 | 15.00 |
| 52 | : 01101000 | 10010011 | 10110101 | 11111111 | 15.30 |
| 53 | : 01101010 | 10011101 | 10001101 | 10000000 | 15.60 |
| 54 | : 01101011 | 10100010 | 10010010 | 11111111 | 15.90 |
| 55 | : 01101101 | 10100001 | 01101001 | 11111111 | 16.20 |
| 56 | : 01101111 | 10010111 | 01001110 | 10000000 | 16.50 |
| 57 | : 01110000 | 10001011 | 01101010 | 10000000 | 16.80 |
| 58 | : 01110001 | 10000111 | 10000000 | 10000000 | 17.10 |
| 59 | : 01110010 | 10001010 | 10001011 | 10000000 | 17.40 |
| 60 | : 01110011 | 10001110 | 10010000 | 10000000 | 17.70 |
| 61 | : 01110011 | 10010011 | 10001101 | 10000000 | 18.00 |
| 62 | : 01110100 | 10010101 | 10000110 | 10000000 | 18.30 |
| 63 | : 01110100 | 10010111 | 01111101 | 10000000 | 18.60 |
| 64 | : 01110100 | 10010100 | 01110101 | 10000000 | 18.90 |
| : | ---- | ---- | ---- | ---- | : |
| 97 | : 01110100 | 10000000 | 10000000 | 00000000 | 28.80 |
| 98 | : 01110100 | 00000000 | 00000000 | 00000000 | 29.10 |

## Fig. 11

| INPUT VARIABLE | INITIAL VALUE | TERMINAL VALUE | MAXIMUM VALUE | MINIMUM VALUE |
|:---:|:---:|:---:|:---:|:---:|
| $x$ | 0.000 | 9.467 | 9.467 | 0.000 |
| $\theta$ | 0.000 | 0.000 | 0.027 | -0.029 |
| $d\theta$ | 0.000 | 0.000 | 0.042 | -0.039 |

EP 0 749 057 B1

## Fig. 12

GOAL 1 :   x :   **VALUE OF "TERMINAL STATE"**   =   9.467

00        00                01                    01110100 01110100
(GOAL     (INPUT           (TYPE FLAG)                  (VALUE)
NUMBER)   VARIABLE)


GOAL 2 :   θ :   **RANGE OF "TRANSITIONAL STATE"** =   [-0.029, 0.027]

01        01                10                    01011011 10100010


GOAL 3 :   dθ :  **RANGE OF "TRANSITIONAL STATE"** =   [-0.039, 0.042]

10        10                10                    01001110 10110101

# Fig. 13

| TIME t | OUTPUT VARIABLE u | ACTION SAMPLE NO. | |
|---|---|---|---|
| 0.00 | 1000 0000 | 1 | |
| 0.30 | 1111 1111 | 2 | STRATEGY CASE NO. 1 |
| 0.30 | 1111 1111 | 2 | |
| 0.60 | 1000 0000 | 3 | NO. 2 |
| 0.60 | 1000 0000 | 3 | |
| 0.90 | 1111 1111 | 4 | NO. 3 |
| 0.90 | 1111 1111 | 4 | |
| 1.20 | 1000 0000 | 5 | NO. 4 |
| 1.20 | 1000 0000 | 5 | |
| 1.50 | 1111 1111 | 6 | NO. 5 |
| 14.40 | 1111 1111 | 49 | |
| 14.70 | 1000 0000 | 50 | NO. 6 |
| 15.00 | 1000 0000 | 51 | |
| 15.30 | 1111 1111 | 52 | NO. 7 |
| 15.30 | 1111 1111 | 52 | |
| 15.60 | 1000 0000 | 53 | NO. 8 |
| 15.60 | 1000 0000 | 53 | |
| 15.90 | 1111 1111 | 54 | NO. 9 |
| 16.20 | 1111 1111 | 55 | |
| 16.50 | 1000 0000 | 56 | NO. 10 |
| 29.10 | 1000 0000 | 98 | |

## Fig. 14

| TIME $t$ | $x_1$ | $x_2$ | u | |
|---|---|---|---|---|
| ⋮ | ⋮ | ⋮ | ⋮ | |
| $t_p$ | 1.0 | 12 | 80 | |
| $t_{p+1}$ | 2.0 | 19 | 80 | |
| $t_{p+2}$ | [3.0] ‒min | 20 | 90 | STRATEGY CASE Q |
| $t_{p+3}$ | 3.5 | [10] ‒min | 90 | |
| $t_{p+4}$ | 4.5 | 16 | 90 | |
| $t_{p+5}$ | [5.5] ‒max | 36 | 90 | |
| $t_{p+6}$ | 4.5 | [45] ‒max | 90 | |
| $t_{p+7}$ | 3.5 | 47 | 100 | STRATEGY CASE Q+1 |
| $t_{p+8}$ | 3.0 | 48 | 100 | |
| $t_{p+9}$ | 2.0 | 43 | 100 | |
| $t_{p+10}$ | 1.0 | 34 | 100 | |
| $t_{p+11}$ | 0.0 | 30 | 110 | |
| ⋮ | ⋮ | ⋮ | ⋮ | |

## Fig. 15

| TIME $t$ | OUTPUT u | |
|---|---|---|
| $t_{p+1}$ | 80 | |
| $t_{p+2}$ | 90 | STRATEGY CASE Q |
| $t_{p+6}$ | 90 | |
| $t_{p+7}$ | 100 | STRATEGY CASE Q+1 |
| $t_{p+10}$ | 100 | |
| $t_{p+11}$ | 110 | |

## *Fig.16*

Fig.17

EP 0 749 057 B1

# *Fig. 18a*

| STRATEGY CASE NO. | u | | | | x | θ | dθ |
|---|---|---|---|---|---|---|---|
| 1 | do : 40.000 | when | : | | 0.000 | 0.000 | 0.000 |
| | | until | : | | 0.000 | 0.000 | 0.000 |
| | | min | : | | 0.000 | 0.000 | 0.000 |
| | | max | : | | 0.000 | 0.000 | 0.000 |
| 2 | do : 0.000 | when | : | | 0.027 | -0.004 | -0.029 |
| | | until | : | | 0.027 | -0.004 | -0.029 |
| | | min | : | | 0.027 | -0.004 | -0.029 |
| | | max | : | | 0.027 | -0.004 | -0.029 |
| 3 | do : 40.000 | when | : | | 0.070 | -0.011 | -0.012 |
| | | until | : | | 0.070 | -0.011 | -0.012 |
| | | min | : | | 0.070 | -0.011 | -0.012 |
| | | max | : | | 0.070 | -0.011 | -0.012 |
| 4 | do : 0.000 | when | : | | 0.120 | -0.017 | -0.027 |
| | | until | : | | 0.120 | -0.017 | -0.027 |
| | | min | : | | 0.120 | -0.017 | -0.027 |
| | | max | : | | 0.120 | -0.017 | -0.027 |
| 5 | do : 40.000 | when | : | | 0.174 | -0.021 | 0.000 |
| | | until | : | | 7.913 | 0.000 | 0.000 |
| | | min | : | | 0.174 | -0.029 | -0.010 |
| | | max | : | | 7.913 | 0.006 | 0.021 |

# Fig.18b

| STRATEGY CASE NO. | | u | | | x | θ | dθ |
|---|---|---|---|---|---|---|---|
| 6 | do : | 0.000 | when : | | 8.107 | 0.000 | 0.000 |
| | | | until : | | 8.274 | 0.004 | 0.029 |
| | | | min : | | 8.107 | 0.000 | 0.000 |
| | | | max : | | 8.274 | 0.004 | 0.029 |
| 7 | do : | 40.000 | when : | | 8.398 | 0.015 | 0.042 |
| | | | until : | | 8.398 | 0.015 | 0.042 |
| | | | min : | | 8.398 | 0.015 | 0.042 |
| | | | max : | | 8.398 | 0.015 | 0.042 |
| 8 | do : | 0.000 | when : | | 8.526 | 0.023 | 0.010 |
| | | | until : | | 8.526 | 0.023 | 0.010 |
| | | | min : | | 8.526 | 0.023 | 0.010 |
| | | | max : | | 8.526 | 0.023 | 0.010 |
| 9 | do : | 40.000 | when : | | 8.660 | 0.027 | 0.014 |
| | | | until : | | 8.796 | 0.026 | -0.018 |
| | | | min : | | 8.660 | 0.026 | -0.018 |
| | | | max : | | 8.796 | 0.027 | 0.014 |
| 10 | do : | 0.000 | when : | | 8.959 | 0.018 | -0.039 |
| | | | until : | | 9.467 | 0.000 | 0.000 |
| | | | min : | | 8.959 | -0.005 | -0.039 |
| | | | max : | | 9.557 | 0.018 | 0.013 |

# Fig. 19

EP 0 749 057 B1

STRATEGY

| CASE NO. | when | x | θ | dθ | until | x | θ | dθ | min | x | θ | dθ |
|---|---|---|---|---|---|---|---|---|---|---|---|---|
| 1 : | | 00001011 | 10000000 | 10000000 | 00001011 | 10000000 | 10000000 | 00001011 | 10000000 | 10000000 |

| max | x | θ | dθ | do | u |
|---|---|---|---|---|---|
| | 00001011 | 10000000 | 10000000 | 11111111 |

2 : 00001011 01111011 01011011 00001011 01111011 01011011 00001011 01111011 01011011
00001011 01111011 01011011 10000000

3 : 00001100 01110010 01110000 00001100 01110010 01110000 00001100 01110010 01110000
00001100 01110010 01110000 11111111

4 : 00001100 01101010 01011101 00001100 01101010 01011101 00001100 01101010 01011101
00001100 01101010 01011101 10000000

5 : 00001101 01100101 10000000 01100011 10000000 10000000 00001101 01011011 01110011
01100011 10000111 10011011 11111111

6 : 01100101 10000000 10000000 01100111 10000101 10100101 01100101 10000000 10000000
01100111 10000101 10100101 10000000

7 : 01101000 10010011 10110101 01101000 10010011 10110101 01101000 10010011 10110101
01101000 10010011 10110101 11111111

8 : 01101010 10011101 10001101 01101010 10011101 10001101 01101010 10011101 10001101
01101010 10011101 10001101 10000000

9 : 01101011 10100010 10010010 01101101 10100001 01101001 01101011 10100001 01101001
01101101 10100010 10010010 11111111

10 : 01101111 10010111 01001110 01110100 10000000 10000000 01101111 01111001 01001110
01110101 10010111 10010000 10000000

## Fig. 20

| GOAL<br>CASE NO. | | | | | | | | | | | | |
|---|---|---|---|---|---|---|---|---|---|---|---|---|
| 1 | PL → | 1 | 2 | 3 | 4 | 5 | 6 | 7 | 8 | 9 | 10 |
| 2 | PL → | NONE | | | | | | | | | |
| 3 | PL → | 7 | | | | | | | | | |

# Fig.21

STRATEGY
CASE NO.

```
1    PH  →   1
1    PL  →   2
2    PH  →   1
2    PL  →   3
3    PH  →   1
3    PL  →   4
4    PH  →   1
4    PL  →   5
5    PH  →   1
5    PL  →   6    7    8    9    10   11   12   13   14   15
             16   17   18   19   20   21   22   23   24   25
             26   27   28   29   30   31   32   33   34   35
             36   37   38   39   40   41   42   43   44   45
             46   47   48   49
6    PH  →   1
6    PL  →   50   51
7    PH  →   1    3
7    PL  →   52
8    PH  →   1
8    PL  →   53
9    PH  →   1
9    PL  →  .54   55
10   PH  →   1
10   PL  →   56   57   58   59   60   61   62   63   64   65
             66   67   68   69   70   71   72   73   74   75
```

EP 0 749 057 B1

# Fig.22

**ACTION
CASE NO.**

| | | | |
|---|---|---|---|
| 2 | PH | → | 1 |
| 3 | PH | → | 2 |
| 4 | PH | → | 3 |
| 5 | PH | → | 4 |
| 6 | PH | → | 5 |
| 7 | PH | → | 5 |
| 8 | PH | → | 5 |
| 9 | PH | → | 5 |
| 10 | PH | → | 5 |
| 11 | PH | → | 5 |
| 12 | PH | → | 5 |
| 13 | PH | → | 5 |
| ⋮ | ⋮ | | ⋮ |
| 47 | PH | → | 5 |
| 48 | PH | → | 5 |
| 49 | PH | → | 5 |
| 50 | PH | → | 6 |
| 51 | PH | → | 6 |
| 52 | PH | → | 7 |
| 53 | PH | → | 8 |
| 54 | PH | → | 9 |
| 55 | PH | → | 9 |
| 56 | PH | → | 10 |
| 57 | PH | → | 10 |
| 58 | PH | → | 10 |
| 59 | PH | → | 10 |
| 60 | PH | → | 10 |
| 61 | PH | → | 10 |
| 62 | PH | → | 10 |
| 63 | PH | → | 10 |
| 64 | PH | → | 10 |
| ⋮ | ⋮ | | ⋮ |
| 97 | PH | → | 10 |
| 98 | PH | → | 10 |

## Fig. 23

EP 0 749 057 B1

# Fig. 24

```
        ┌─────────────────────┐
        │   PROBLEM-SOLVING    │
        │        MODE          │
        └─────────────────────┘
                   │
        ┌─────────────────────┐
        │ ACCEPT INPUT VARIABLE VALUES │── 121
        │          AND         │
        │  APPLY BINARY ENCODING │
        └─────────────────────┘
                   │
        ┌─────────────────────┐
        │      EXECUTE         │── 122
        │ GOAL CASE MATCHING   │
        └─────────────────────┘
                   │
        ┌─────────────────────┐
        │      EXECUTE         │── 123
        │ STRATEGY CASE MATCHING │
        └─────────────────────┘
                   │
        ┌─────────────────────┐
        │      EXECUTE         │── 124
        │ ACTION CASE MATCHING │
        └─────────────────────┘
                   │
        ┌─────────────────────┐
        │  PRESENT SOLUTION    │── 125
        │ (DELIVER OUTPUT DATA) │
        └─────────────────────┘
                   │
        ┌─────────────────────┐
        │        END          │
        └─────────────────────┘
```

## Fig.25

INPUT/OUTPUT

| DATA NO. | x | θ | dθ | u | (GOAL CASE NO. → STRATEGY CASE NO. → ACTION CASE NO.) |
|---|---|---|---|---|---|
| 1 | 0.000 | 0.000 | 0.000 | 40.000 | (1 → 1 → 2) |
| 2 | 0.027 | -0.005 | -0.030 | 0.000 | (1 → 2 → 3) |
| 3 | 0.072 | -0.011 | -0.014 | 40.000 | (1 → 3 → 4) |
| 4 | 0.126 | -0.018 | -0.030 | 0.000 | (1 → 4 → 5) |
| 5 | 0.185 | -0.023 | -0.003 | 40.000 | (1 → 5 → 6) |
| 6 | 0.248 | -0.025 | -0.012 | 40.000 | (1 → 5 → 8) |
| 7 | 0.342 | -0.029 | -0.012 | 40.000 | (1 → 5 → 9) |
| 8 | 0.455 | -0.032 | -0.007 | 40.000 | (1,2 → 5 → 9) |
| 9 | 0.583 | -0.032 | 0.002 | 40.000 | (1,2 → 5 → 10) |
| 10 | 0.722 | -0.030 | 0.012 | 40.000 | (1,2 → 5 → 11) |
| 11 | 0.871 | -0.025 | 0.021 | 40.000 | (1 → 5 → 13) |
| 12 | 1.028 | -0.018 | 0.026 | 40.000 | (1 → 5 → 13) |
| 13 | 1.194 | -0.010 | 0.028 | 40.000 | (1 → 5 → 14) |
| : | ---- | ---- | ---- | ---- | -------- |
| 47 | 7.722 | 0.002 | 0.003 | 40.000 | (1 → 5 → 48) |
| 48 | 7.917 | 0.002 | 0.001 | 40.000 | (1 → 5 → 49) |
| 49 | 8.112 | 0.003 | 0.000 | 0.000 | (1 → 6 → 50) |
| 50 | 8.280 | 0.007 | 0.028 | 0.000 | (1 → 6 → 51) |
| 51 | 8.404 | 0.017 | 0.041 | 40.000 | (1 → 7 → 52) |
| 52 | 8.529 | 0.025 | 0.011 | 0.000 | (1 → 8 → 53) |
| 53 | 8.654 | 0.029 | 0.016 | 40.000 | (1 → 9 → 54) |
| 54 | 8.780 | 0.029 | -0.017 | 40.000 | (1 → 9 → 55) |
| 55 | 8.932 | 0.021 | -0.040 | 0.000 | (1,3 → 10 → 56) |
| 56 | 9.069 | 0.011 | -0.021 | 0.000 | (1 → 10 → 57) |
| 57 | 9.167 | 0.007 | -0.008 | 0.000 | (1 → 10 → 58) |
| 58 | 9.237 | 0.006 | 0.002 | 0.000 | (1 → 10 → 59) |
| 59 | 9.289 | 0.007 | 0.007 | 0.000 | (1 → 10 → 59) |
| 60 | 9.329 | 0.010 | 0.008 | 0.000 | (1 → 10 → 60) |
| 61 | 9.360 | 0.012 | 0.006 | 0.000 | (1 → 10 → 61) |
| 62 | 9.387 | 0.013 | 0.002 | 0.000 | (1 → 10 → 61) |
| 63 | 9.409 | 0.013 | -0.002 | 0.000 | (1 → 10 → 63) |
| 64 | 9.429 | 0.012 | -0.006 | 0.000 | (1 → 10 → 64) |
| : | ---- | ---- | ---- | ---- | -------- |
| 97 | 9.476 | 0.001 | -0.002 | 0.000 | (1 → 10 → 79) |
| 98 | 9.477 | 0.001 | -0.002 | 0.000 | (1 → 10 → 82) |

Legend for rightmost column: GOAL CASE NO. → STRATEGY CASE NO. → ACTION CASE NO.